# EUROPEAN PATENT SPECIFICATION

(11) **EP 4 364 973 B1**
(45) Date of publication and mention of the grant of the patent: **03.12.2025**
(21) Application number: 23206188.7
(22) Date of filing: 26.10.2023
(51) Int. Cl.: B60C 11/03, B60C 11/13

(54) **HEAVY DUTY TIRE**
SCHWERLASTREIFEN
PNEU POUR POIDS LOURDS

(30) Priority: 02.11.2022 JP 2022175929
(43) Date of publication of application: 08.05.2024
(73) Proprietor: Sumitomo Rubber Industries, Ltd., Kobe-shi, Hyogo 651-0072 (JP)
(72) Inventor: ITO, Shuhei, Kobe-shi, 651-0072 (JP)
(74) Representative: Manitz Finsterwald Patent- und Rechtsanwaltspartnerschaft mbB

(56) References cited:
- EP-A1- 3 505 368
- EP-A2- 0 841 199
- DE-T5- 112019 004 945
- JP-A- 2020 055 356
- JP-A- H1 024 705
- US-A1- 2021 339 571
- US-A1- 2022 032 691

## Description

### BACKGROUND OF THE INVENTION

### Field of the Invention

The present invention relates to a heavy duty tire.

### Background Art

In order to improve braking performance on a wet road surface (hereinafter, also referred to as wet performance), it is known to provide lateral grooves on land portions of a tread such that the lateral grooves traverse the land portions (e.g., Japanese Laid-Open Patent Publication No. 2016-210226).

A heavy duty tire in accordance the preamble of claim 1 is known from JP H10 24705 A. Related tires are known from JP 2020 055356 A, US 2021/339571 A1, EP 0 841 199 A2, DE 11 2019 004945 T5 and EP 3 505 368 A1.

The lateral grooves decrease the stiffness of the land portions. The land portions having low stiffness may cause an increase in rolling resistance. The land portions having low stiffness are easily worn.

By making the lateral grooves shallow, the tire can suppress a decrease in the stiffness of the land portions. However, if the lateral grooves are shallow, the lateral grooves disappear due to wear of the land portions. The disappearance of the lateral grooves leads to a decrease in wet performance.

The present invention has been made in view of such circumstances. An object of the present invention is to provide a heavy duty tire that can stably exhibit good wet performance while suppressing an increase in rolling resistance and a decrease in wear resistance.

### SUMMARY OF THE INVENTION

The object is solved by a heavy duty tire having the features of claim 1. Subclaims are directed at preferable embodiments of the invention.

A tire according to the present invention includes a tread having a tread surface configured to come into contact with a road surface. The tread has a plurality of circumferential grooves continuously extending in a circumferential direction. The plurality of circumferential grooves divide the tread into a plurality of land portions aligned in an axial direction. Among the plurality of land portions, a land portion including an equator or a land portion closest to the equator is a crown land portion, and a land portion closest to the crown land portion is a middle land portion. The crown land portion and/or the middle land portion is a block-shaped land portion having blocks aligned in the circumferential direction and having a lateral groove between adjacent blocks. Circumferential grooves located on both sides of the block-shaped land portion are each an irregular circumferential groove having a non-flat groove wall. The lateral groove is shallower than the irregular circumferential groove. A virtual opening of the irregular circumferential groove obtained by virtually cutting the tread along a plane including a groove bottom of the lateral groove includes a pair of virtual edges extending in a zigzag or wavy manner, each of the pair of virtual edges includes a plurality of virtual peaks closer to the first end or the second end of the tread surface, the virtual peaks closer to the first end of the tread surface and the virtual peaks closer to the second end of the tread surface are arranged alternately in the circumferential direction, and a distance in the axial direction from the virtual peak closer to the first end to the virtual peak closer to the second end is an amplitude of the virtual edge. The amplitude of the virtual edge is larger than the amplitude of the edge, and a number of the virtual peaks included in the virtual edge is larger than a number of the lateral grooves included in the block-shaped land portion.

By forming the tire as described above, the edges of the lateral groove serve as an edge component that scratches a road surface. Since the lateral groove is shallower than the irregular circumferential groove, the block-shaped land portion can have required stiffness. Excessive deformation of the block-shaped land portion can be suppressed. Even after the lateral groove disappears, the edges of the irregular circumferential groove that appear due to wear of the tread can effectively contribute as an edge component. The virtual edges of the irregular circumferential groove that appear due to wear of the tread compensate for the edge component that is reduced due to disappearance of the lateral groove. The tire can stably exhibit good wet performance. The tire can stably exhibit good wet performance while suppressing an increase in rolling resistance and a decrease in wear resistance.

In a not-claimed heavy duty tire, an opening of the irregular circumferential groove includes a pair of edges extending in a zigzag or wavy manner. If the pair of edges extend in a zigzag or wavy manner, each edge includes a plurality of peaks closer to a first end or a second end of the tread surface, the peaks closer to the first end of the tread surface and the peaks closer to the second end of the tread surface are arranged alternately in the circumferential direction, and a distance in the axial direction from the peak closer to the first end to the peak closer to the second end is an amplitude of the edge.

According to the present invention, a heavy duty tire that can stably exhibit good wet performance while suppressing an increase in rolling resistance and a decrease in wear resistance, is obtained.

According to an embodiment of the invention, the irregular circumferential groove includes a first groove wall located on the first end side of the tread surface, a second groove wall located on the second end side of the tread surface, and a groove bottom portion connecting the first groove wall and the second groove wall and having a groove bottom, the first groove wall and the second groove wall are each the non-flat groove wall, a locus of the groove bottom in the irregular circumferential groove extends in a zigzag or wavy manner while alternately passing through first peaks closer to the first end of the tread surface and second peaks closer to the second end of the tread surface, the first groove wall and the second groove wall are each inclined with respect to a normal line of the tread surface at the edge of the irregular circumferential groove, an inclination angle of the first groove wall at each first peak is smaller than an inclination angle of the second groove wall, and the inclination angle of the first groove wall at each second peak is larger than the inclination angle of the second groove wall. By forming the tire as described, the first groove wall and the second groove wall of the irregular circumferential groove can effectively contribute to improvement of wet performance.

According to an embodiment of the invention, an opening width of the virtual opening is equal to a sum of a first opening width represented as a distance in the axial direction from the groove bottom to the virtual edge on the first end side of the tread surface and a second opening width represented as a distance in the axial direction from the groove bottom to the virtual edge on the second end side of the tread surface, the first opening width is narrower than the second opening width at each first peak, and the first opening width is wider than the second opening width at each second peak. By forming the tire as described, even if the tread is worn, the edges of the irregular circumferential groove can effectively contribute to improvement of wet performance.

According to an embodiment of the invention, a ratio of a depth of the lateral groove to a depth of the irregular circumferential groove is not less than 0.12 and not greater than 0.32. By forming the tire as described, the lateral groove can effectively contribute to exhibiting wet performance. The influence of the lateral groove on the stiffness of the block-shaped land portion is suppressed, and thus the lateral groove can effectively contribute to the tire maintaining low rolling resistance and good wear resistance.

According to an embodiment of the invention, the middle land portion is the block-shaped land portion, the middle land portion has a middle lateral groove as the lateral groove and a middle longitudinal groove continuously extending in the circumferential direction, and the middle longitudinal groove is shallower than the irregular circumferential groove. By forming the tire as described, the tire can have improved wet performance due to the synergistic effect of the middle lateral groove and the middle longitudinal groove. The tire can suppress excessive deformation of the middle land portion and thus can suppress an increase in rolling resistance and a decrease in wear resistance.

According to an embodiment of the invention, a ratio of a depth of the middle longitudinal groove to the depth of the irregular circumferential groove is not less than 0.12 and not greater than 0.32. By forming the tire as described, the middle longitudinal groove can effectively contribute to exhibiting wet performance, and can effectively contribute to the tire maintaining low rolling resistance and good wear resistance.

According to an embodiment of the invention, the middle longitudinal groove includes first middle longitudinal grooves inclined with respect to the circumferential direction and second middle longitudinal grooves inclined in a direction opposite to a direction of inclination of the first middle longitudinal grooves, and the first middle longitudinal grooves and the second middle longitudinal grooves are arranged alternately in the circumferential direction. By forming the tire as described, the middle longitudinal groove including the first middle longitudinal grooves and the second middle longitudinal grooves serves as an edge component. The middle longitudinal groove can contribute to improvement of wet performance.

According to an embodiment of the invention, an inclination angle of each first middle longitudinal groove is not less than 4 degrees and not greater than 12 degrees. By forming the tire as described, the first middle longitudinal grooves can effectively serve as an edge component. The first middle longitudinal grooves can contribute to improvement of wet performance.

According to an embodiment of the invention, the first middle longitudinal grooves and the second middle longitudinal grooves alternately intersect a plurality of middle lateral grooves aligned in the circumferential direction, and a ratio of a distance in the circumferential direction from a position of intersection of the second middle longitudinal groove and the middle lateral groove to a boundary between the second middle longitudinal groove and the first middle longitudinal groove, to a distance in the circumferential direction, between adjacent middle lateral grooves, represented as a distance in the circumferential direction from the position of intersection of the second middle longitudinal groove and the middle lateral groove to a position of intersection of the first middle longitudinal groove and the middle lateral groove, is not less than 0.07 and not greater than 0.20. By forming the tire as described, draining of water in the middle longitudinal groove into the irregular circumferential groove is promoted. Each of the first middle longitudinal grooves and the second middle longitudinal grooves can effectively serve as an edge component. The tire can have improved wet performance.

According to an embodiment of the invention, the first middle longitudinal grooves and the second middle longitudinal grooves intersect the middle lateral grooves at a center in the axial direction of the middle land portion. By forming the tire as described, the middle longitudinal groove including the first middle longitudinal grooves and the second middle longitudinal grooves can effectively serve as an edge component. The middle longitudinal groove can contribute to improvement of wet performance.

According to an embodiment of the invention, each middle lateral groove is curved in an arc shape. By forming the tire as described, stress acting on the edges of the middle lateral groove is distributed. Occurrence of wear starting from the edges is suppressed. The middle lateral groove can stably exhibit its function as an edge component. The middle lateral groove can contribute to improvement of wet performance.

According to an embodiment of the invention, the crown land portion is the block-shaped land portion, the crown land portion has a crown lateral groove as the lateral groove, the crown lateral groove is inclined with respect to the axial direction, and an inclination angle of the crown lateral groove is not less than 15 degrees and not greater than 30 degrees. By forming the tire as described, the tire can ensure the volume of the crown lateral groove while suppressing the influence of the crown lateral groove on stiffness. The tire can have improved wet performance while maintaining low rolling resistance and good wear resistance.

### BRIEF DESCRIPTION OF THE DRAWINGS

FIG. 1 is a development view showing a tread of a heavy duty tire according to one embodiment of the present invention;
FIG. 2 is an enlarged development view showing a part of FIG. 1;
FIG. 3 is a cross-sectional view showing a part of a cross-section taken along a line III-III in FIG. 2;
FIG. 4 is a development view showing a not-claimed modification of a tread pattern;
FIG. 5 is a cross-sectional view showing a part of a cross-section taken along a line V-V in FIG. 2;
FIG. 6 is a cross-sectional view showing a part of a cross-section taken along a line VI-VI in FIG. 2;
FIG. 7 is a cross-sectional view showing a part of a cross-section taken along a line VII-VII in FIG. 2;
FIG. 8 is a cross-sectional view showing a part of a cross-section taken along a line VIII-VIII in FIG. 2;
FIG. 9 is a development view showing a virtual tread pattern of the worn tread;
FIG. 10 is an enlarged development view showing a part of a block-shaped land portion in FIG. 1;
FIG. 11 is a cross-sectional view showing a part of a cross-section taken along a line XI-XI in FIG. 10; and
FIG. 12 is a cross-sectional view showing a part of a cross-section taken along a line XII-XII in FIG. 10.

### DETAILED DESCRIPTION

Hereinafter, the present invention will be described in detail based on preferred embodiments with appropriate reference to the drawings.

A tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is also referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cross-section of the tire obtained by cutting the tire along a plane including a rotation axis. In this measurement, the tire is set such that the distance between left and right beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

### [Details of Embodiments of Present Invention]

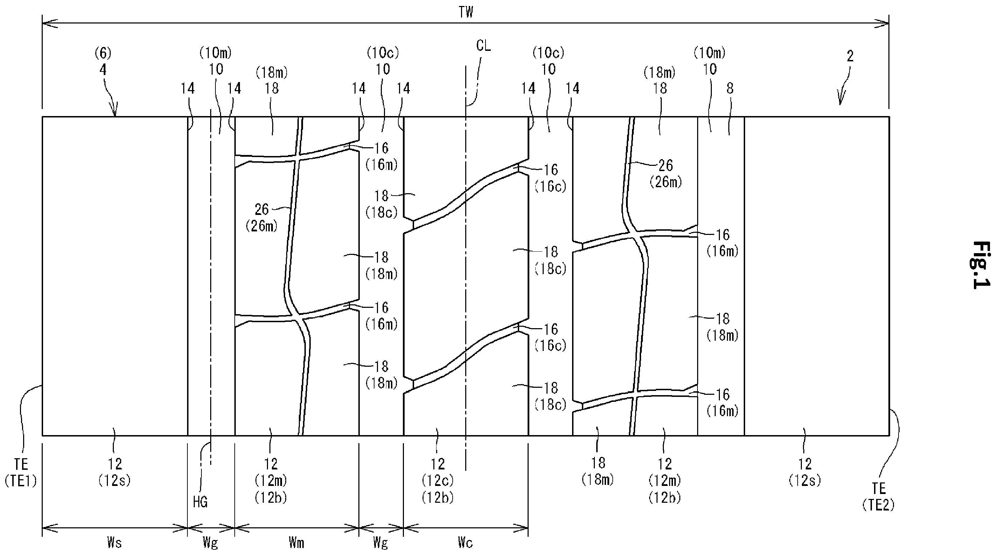

FIG. 1 shows a part of a tire 2 according to one embodiment of the present invention. The tire 2 is mounted to a vehicle such as a truck and a bus. The tire 2 is also referred to as heavy duty tire.

In FIG. 1, the right-left direction is the axial direction of the tire 2, and the up-down direction is the circumferential direction of the tire 2. The direction perpendicular to the surface of the drawing sheet of FIG. 1 is the radial direction of the tire 2. In FIG. 1, an alternate long and short dash line CL extending in the circumferential direction represents the equator plane of the tire 2.

FIG. 1 shows a tread 4. The tire 2 includes the tread 4. The tread 4 is included in a tread portion of the tire 2. The tread 4 is formed from a crosslinked rubber.

The tread 4 comes into contact with a road surface at a tread surface 6 thereof. The tread 4 has the tread surface 6 which comes into contact with a road surface. A line of intersection of the tread surface 6 and the equator plane CL is an equator.

FIG. 1 is a development view of the tread surface 6. In FIG. 1, each position indicated by reference character TE is an end of the tread surface 6. In the tread surface 6 shown in FIG. 1, the end TE located on the left side of the equator plane CL is a first end TE1, and the end TE located on the right side of the equator plane CL is a second end TE2. In FIG. 1, a length indicated by reference character TW is the width of the tread surface 6. The width TW of the tread surface 6 is the distance in the axial direction from the first end TE1 to the second end TE2.

In the present invention, if the ends TE of the tread surface 6 cannot be identified as clear edges in appearance, positions, on the tread surface 6, corresponding to the axially outer ends (also referred to as ground-contact ends) of a ground-contact surface are specified as the ends TE of the tread surface 6. The ground-contact surface is obtained when a load equivalent to a standardized load of the tire 2 is applied to the tire 2 and the tire 2 is brought into contact with a road surface composed of a flat surface in a state where the camber angle of the tire 2 in a standardized state is set to 0°.

Grooves 8 are formed on the tread 4. Accordingly, a tread pattern is formed on the tread 4. FIG. 1 shows the tread pattern of the tire 2. The tread pattern in FIG. 1 is a substantially point-symmetrical tread pattern having a center point on the equator. Although not shown, the tire 2 may have, for example, a line-symmetrical tread pattern centered on the equator, or an asymmetrical tread pattern. The tire 2 may have a tread pattern having a directivity in the circumferential direction.

On the tread 4, a plurality of circumferential grooves 10 are formed so as to continuously extend in the circumferential direction. The tread 4 shown in FIG. 1 has four circumferential grooves 10. Accordingly, five land portions 12 are formed in the tread 4 so as to be aligned in the axial direction. The four circumferential grooves 10 divide the tread 4 (specifically, a portion including the tread surface 6 of the tread 4) into the five land portions 12.

The opening of each circumferential groove 10 includes a pair of edges 14. A groove width Wg of each circumferential groove 10 is represented as the distance in the axial direction between the pair of edges 14 included in the opening thereof. In the case where the groove width Wg varies in the circumferential direction, the groove width Wg is represented as the maximum width. The depth of each circumferential groove 10 is represented as the distance from a line segment connecting the left and right edges 14 to the groove bottom.

In FIG. 1, an alternate long and short dash line HG extending straight in the circumferential direction is a center line of the groove width Wg (hereinafter, groove width center line HG). In the case where the opening of the circumferential groove 10 extends in a zigzag manner in the circumferential direction, the groove width center line HG passes through the center of the distance in the axial direction from a peak on the first end TE1 side of the edge 14 on the first end TE1 side to a peak on the second end TE2 side of the edge 14 on the second end TE2 side.

The groove width Wg of each circumferential groove 10 is preferably, for example, not less than 4.0% and not greater than 8.0% of the width TW of the tread surface 6. The depth of each circumferential groove 10 is preferably, for example, not less than 10 mm and not greater than 21 mm. From the viewpoint that the tire 2 can exhibit good wet performance, the depth is more preferably not less than 13 mm and not greater than 18 mm.

Among the four circumferential grooves 10, the circumferential groove 10 closest to the equator is a center circumferential groove 10c. The circumferential groove 10 closest to the center circumferential groove 10c is a middle circumferential groove 10m. The tread 4 shown in FIG. 1 includes a pair of the center circumferential grooves 10c and a pair of the middle circumferential grooves 10m located axially outward of the center circumferential grooves 10c.

The tread 4 may have a circumferential groove 10 including the equator. In this case, the circumferential groove 10 including the equator is the center circumferential groove 10c.

In a zone from the equator to the first end TE1 (hereinafter, also referred to as first zone), the second end TE2 side is the equator side, and in a zone from the equator to the second end TE2 (hereinafter, also referred to as second zone), the first end TE1 side is the equator side. For example, the edge 14 on the first end TE1 side of the middle circumferential groove 10m in the first zone corresponds to the edge 14 on the second end TE2 side of the middle circumferential groove 10m in the second zone.

Among the five land portions 12, the land portion 12 including the equator is a crown land portion 12c. The land portion 12 closest to the crown land portion 12c is a middle land portion 12m. The land portion 12 including the end TE of the tread surface 6 is a shoulder land portion 12s. In the tread 4, the shoulder land portion 12s is the land portion 12 closest to the crown land portion 12c after the middle land portion 12m.

The tread 4 shown in FIG. 1 includes the crown land portion 12c, a pair of the middle land portions 12m located axially outward of the crown land portion 12c, and the shoulder land portions 12s located axially outward of the middle land portions 12m.

In the case where the tread 4 has a circumferential groove 10 including the equator, the land portion 12 closest to the equator is the crown land portion 12c.

The top surface of each land portion 12 forms a part of the tread surface 6. The above-described edges 14 are each the boundary between the top surface of the land portion 12 and the circumferential groove 10.

In FIG. 1, a length indicated by reference character Wc is the width of the crown land portion 12c. The width Wc is the distance in the axial direction from the edge 14 on the first end TE1 side to the edge 14 on the second end TE2 side of the crown land portion 12c. A length indicated by reference character Wm is the width of the middle land portion 12m. The width Wm is the distance in the axial direction from the edge 14 on the first end TE1 side to the edge 14 on the second end TE2 side of the middle land portion 12m. A length indicated by reference character Ws is the width of the shoulder land portion 12s. The width Ws is the distance in the axial direction from the end TE of the tread surface 6 to the edge 14 on the equator side of the top surface of the shoulder land portion 12s.

The width of each land portion 12 is determined as appropriate in consideration of grip performance and wet performance. In the tread 4 shown in FIG. 1, the ratio (Wc/TW) of the width Wc of the crown land portion 12c to the width TW of the tread surface 6 is preferably not less than 0.10 and not greater than 0.20. The ratio (Wm/TW) of the width Wm of the middle land portion 12m to the width TW of the tread surface 6 is preferably not less than 0.10 and not greater than 0.20. The ratio (Ws/TW) of the width Ws of the shoulder land portion 12s to the width TW of the tread surface 6 is preferably not less than 0.10 and not greater than 0.25.

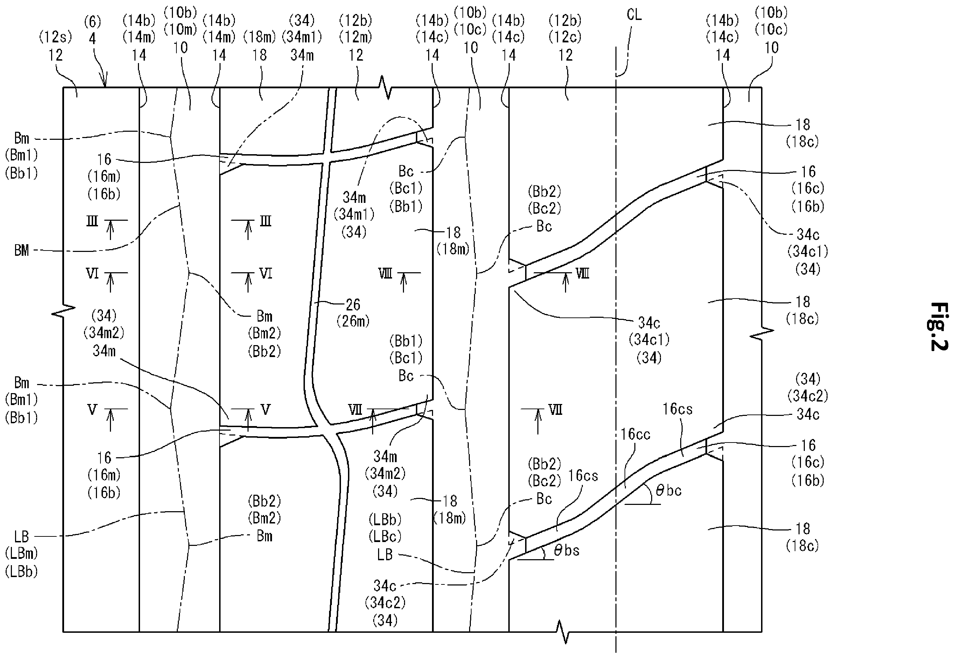

FIG. 2 shows a part of the tread 4 in FIG. 1. The left side of the equator plane CL is the first end TE1 side of the tread surface 6. The middle land portion 12m is present between the middle circumferential groove 10m and the center circumferential groove 10c.

The crown land portion 12c is present between the center circumferential groove 10c on the first end TE1 side and the center circumferential groove 10c on the second end TE2 side.

In the tread 4 shown in FIG. 1, lateral grooves 16 are formed on the crown land portion 12c and the middle land portions 12m. The groove width of each lateral groove 16 is narrower than the groove width of each circumferential groove 10.

A plurality of lateral grooves 16 (hereinafter, also referred to as crown lateral grooves 16c) are formed on the crown land portion 12c. The crown lateral grooves 16c traverse the crown land portion 12c. The crown lateral grooves 16c extend between the center circumferential groove 10c on the first end TE1 side and the center circumferential groove 10c on the second end TE2 side. The crown lateral grooves 16c are shallower than the center circumferential grooves 10c. The crown lateral grooves 16c are shallower than the middle circumferential grooves 10m.

By forming the plurality of crown lateral grooves 16c on the crown land portion 12c, a plurality of blocks 18 (hereinafter, also referred to as crown blocks 18c) are formed so as to be aligned in the circumferential direction. The plurality of crown lateral grooves 16c divide a portion including the top surface of the crown land portion 12c, into the plurality of crown blocks 18c. The crown lateral groove 16c is present between the crown blocks 18c adjacent to each other in the circumferential direction.

Although not described in detail, the pitch of the crown lateral grooves 16c on the crown land portion 12c is set as appropriate according to the specifications of the tire 2.

A plurality of lateral grooves 16 (hereinafter, also referred to as middle lateral grooves 16m) are formed on each middle land portion 12m. The middle lateral grooves 16m traverse the middle land portion 12m. The middle lateral grooves 16m extend between the center circumferential groove 10c and the middle circumferential groove 10m. The middle lateral grooves 16m are shallower than the center circumferential grooves 10c and are shallower than the middle circumferential grooves 10m.

Each middle lateral groove 16m has the same depth as that of each crown lateral groove 16c. Each middle lateral groove 16m may be shallower or deeper than each crown lateral groove 16c.

By forming the plurality of middle lateral grooves 16m on each middle land portion 12m, a plurality of blocks 18 (hereinafter, also referred to as middle blocks 18m) are formed so as to be aligned in the circumferential direction. The plurality of middle lateral grooves 16m divide a portion including the top surface of the middle land portion 12m, into the plurality of middle blocks 18m. The middle lateral groove 16m is present between the middle blocks 18m adjacent to each other in the circumferential direction.

The pitch of the middle lateral grooves 16m on the middle land portion 12m is the same as the pitch of the crown lateral grooves 16c on the crown land portion 12c.

As shown in FIG. 1, unlike the crown land portion 12c and each middle land portion 12m, no lateral groove 16 is formed on each shoulder land portion 12s. A plurality of lateral grooves 16 may be formed on each shoulder land portion 12s.

In the present invention, a land portion 12 having blocks 18 aligned in the circumferential direction and having a lateral groove 16 between adjacent blocks 18 is also referred to as a block-shaped land portion 12b. In the tread 4 shown in FIG. 1, the crown land portion 12c and the middle land portions 12m are block-shaped land portions 12b.

In the present invention, only the crown land portion 12c may be a block-shaped land portion 12b, or only the middle land portions 12m may be block-shaped land portions 12b.

The crown land portion 12c and/or each middle land portion 12m is a block-shaped land portion 12b.

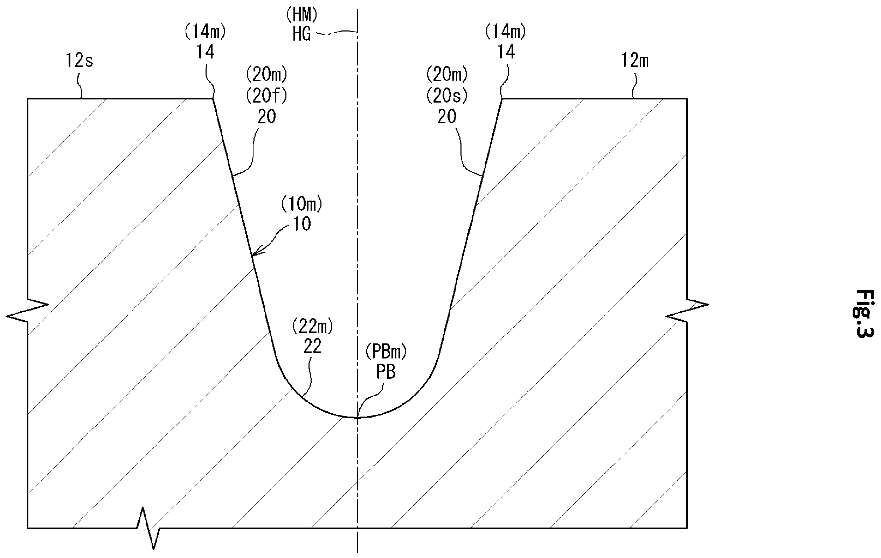

FIG. 3 is a cross-sectional view of the middle circumferential groove 10m taken along a line III-III in FIG. 2. In FIG. 3, the left side of the groove width center line HG of the middle circumferential groove 10m (hereinafter, groove width center line HM) is the first end TE1 side of the tread surface 6. The configuration of each circumferential groove 10 will be described using the cross-section of this middle circumferential groove 10m.

Each circumferential groove 10 includes a pair of groove walls 20 and a groove bottom portion 22 connecting both groove walls 20.

Each groove wall 20 includes the above-described edge 14. The groove wall 20 extends between the edge 14 and the groove bottom portion 22. Of the pair of groove walls 20, the groove wall 20 on the first end TE1 side of the tread surface 6 is a first groove wall 20f, and the groove wall 20 on the second end TE2 side of the tread surface 6 is a second groove wall 20s.

In FIG. 3, reference character PB represents the position of the groove bottom of the circumferential groove 10. The groove bottom portion 22 has a groove bottom PB. The groove bottom PB is at the deepest position in the cross-section of the circumferential groove 10. The distance from a line segment connecting the left and right edges 14 of the circumferential groove 10 to the groove bottom portion 22 is measured along a normal line of this line segment. The position at which the distance from the line segment to the groove bottom portion 22 becomes maximum is the groove bottom PB.

The groove bottom portion 22 shown in FIG. 3 is a curved surface. In other words, the contour of the groove bottom portion 22 is an arc. The groove bottom portion 22 may include a flat surface, and this flat surface may include the groove bottom PB. In this case, the center of the width of the flat surface is used as the groove bottom PB.

As shown in FIG. 2, the pair of edges 14 included in the opening of the circumferential groove 10 extend straight. In a not-claimed tire, the edges 14 may extend in a zigzag or wavy manner.

In FIG. 2, each alternate long and short dash line LB is the locus of the groove bottom PB of the circumferential groove 10. The locus LB of the groove bottom of each circumferential groove 10 shown in FIG. 2 extends in a zigzag manner. The locus LB may extend in a wavy manner, or may extend straight.

In the middle circumferential groove 10m shown in FIG. 2, a pair of edges 14m included in the opening thereof extend straight.

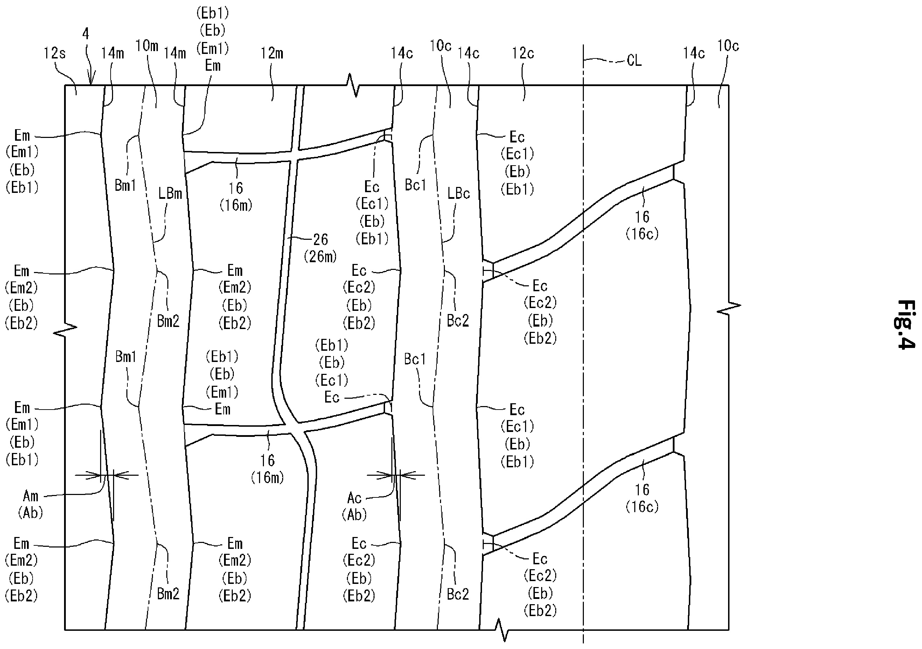

FIG. 4 shows a not-claimed modification of the tread pattern. As shown in FIG. 4, the edges 14m of the middle circumferential groove 10m may extend in a zigzag manner. Although not shown, the edges 14m may extend in a wavy manner.

In the middle circumferential groove 10m shown in FIG. 4, each edge 14m includes a plurality of peaks Em closer to the first end TE1 or the second end TE2 of the tread surface 6, and these peaks Em are arranged at equal intervals in the circumferential direction. The peaks Em closer to the first end TE1 of the tread surface 6 (hereinafter, first peaks Em1) and the peaks Em closer to the second end TE2 of the tread surface 6 (hereinafter, second peaks Em2) are arranged alternately in the circumferential direction. The edge 14m extends in a zigzag manner while alternately passing through the first peaks Em1 and the second peaks Em2.

Although not shown, in the case where the edge 14m extends in a wavy manner, the edge 14m extends in a wavy manner while alternately passing through the first peaks Em1 and the second peaks Em2.

In the middle circumferential groove 10m shown in FIG. 4, the positions in the circumferential direction of the first peaks Em1 and the second peaks Em2 in the edge 14m on the first end TE1 side included in the opening thereof coincide with the positions in the circumferential direction of the first peaks Em1 and the second peaks Em2 in the edge 14m on the second end TE2 side included in the opening thereof.

If the number of peaks Em included in the edge 14m on the first end TE1 side and the number of peaks Em included in the edge 14m on the second end TE2 side are the same, the positions in the circumferential direction of the first peaks Em1 and the second peaks Em2 in the edge 14m on the second end TE2 side may be displaced relative to the positions in the circumferential direction of the first peaks Em1 and the second peaks Em2 in the edge 14m on the first end TE1 side.

In FIG. 4, a length indicated by reference character Am is the distance in the axial direction from the first peak Em1 to the second peak Em2 in the edge 14m of the middle circumferential groove 10m. The distance Am in the axial direction is the amplitude of the edge 14m of the middle circumferential groove 10m. Since each edge 14m of each middle circumferential groove 10m shown in FIG. 1 extends straight, the amplitude Am thereof is 0 (zero) mm.

In FIG. 2, an alternate long and short dash line LBm represents the locus of a groove bottom PBm of the middle circumferential groove 10m. The locus LBm of the groove bottom PBm extends in a zigzag manner. The locus LBm includes a plurality of peaks Bm closer to the first end TE1 or the second end TE2 of the tread surface 6, and these peaks Bm are arranged at equal intervals in the circumferential direction. The peaks Bm closer to the first end TE1 of the tread surface 6 (hereinafter, first peaks Bm1) and the peaks Bm closer to the second end TE2 of the tread surface 6 (hereinafter, second peaks Bm2) are arranged alternately in the circumferential direction. The locus LBm extends in a zigzag manner while alternately passing through the first peaks Bm1 and the second peaks Bm2.

Although not shown, the locus LBm may extend in a wavy manner. In this case, the locus LBm extends in a wavy manner while alternately passing through the first peaks Bm1 and the second peaks Bm2.

The locus LBm of the groove bottom PBm shown in FIG. 4 has the same configuration as the locus LBm of the groove bottom PBm shown in FIG. 2. The locus LBm in FIG. 4 also extends in a zigzag manner while alternately passing through the first peaks Bm1 and the second peaks Bm2.

In FIG. 4, the positions in the circumferential direction of the first peaks Bm1 and the second peaks Bm2 in the locus LBm of the groove bottom PBm coincide with the positions in the circumferential direction of the first peaks Em1 and the second peaks Em2 in the edge 14m of the opening.

If the number of peaks Bm included in the locus LBm of the groove bottom PBm and the number of peaks Em included in the edge 14m of the opening are the same, the positions in the circumferential direction of the first peaks Bm1 and the second peaks Bm2 in the locus LBm of the groove bottom PBm may be displaced relative to the positions in the circumferential direction of the first peaks Em1 and the second peaks Em2 in the edge 14m.

The above-described line III-III in FIG. 2 passes through a specific position, on the locus LBm, indicated by reference character BM. The position BM is a position equidistant from the first peak Bm1 and the second peak Bm2, and is also referred to as midpoint. The cross-section of the circumferential groove 10 shown in FIG. 3 is a cross-section of the middle circumferential groove 10m at the midpoint BM.

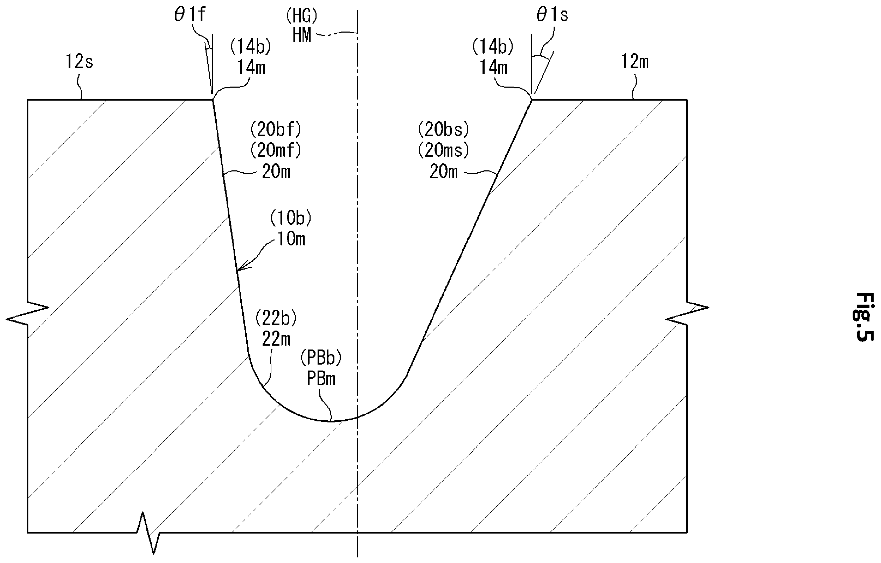

FIG. 5 is a cross-sectional view taken along a line V-V in FIG. 2. In FIG. 2, the line V-V extends in the axial direction and passes through the first peak Bm1 of the locus LBm. FIG. 5 shows a cross-section of the middle circumferential groove 10m at the first peak Bm1. In FIG. 5, the left side of the groove width center line HM is the first end TE1 side of the tread surface 6.

The middle circumferential groove 10m includes a pair of groove walls 20m and a groove bottom portion 22m connecting both groove walls 20m. The groove bottom portion 22m has the groove bottom PBm.

A solid line HM is a center line of the groove width. As shown in FIG. 5, the groove bottom PBm is located on the first end TE1 side of the tread surface 6 with respect to the groove width center line HM in the axial direction. The position of the groove bottom PBm at the above-described midpoint BM coincides with the point of intersection of the groove width center line HM and the groove bottom portion 22m as shown in FIG. 3.

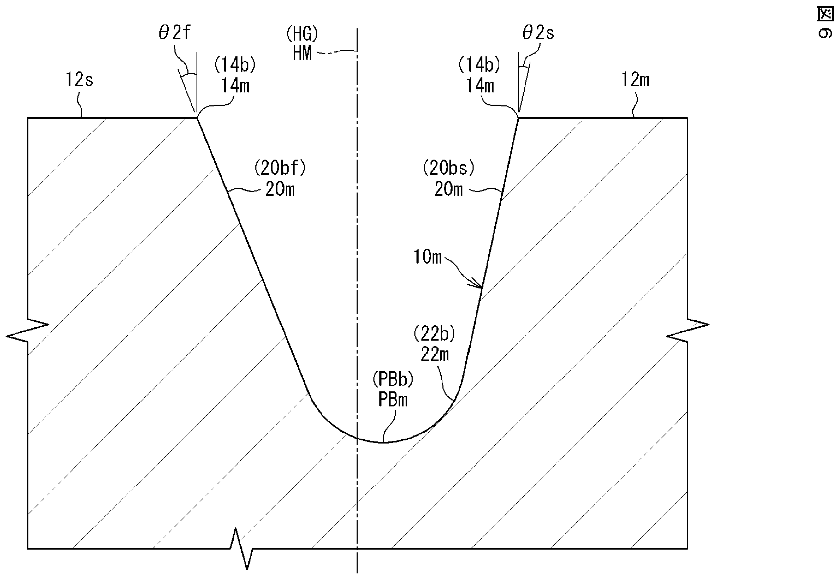

FIG. 6 is a cross-sectional view taken along a line VI-VI in FIG. 2. In FIG. 2, the line VI-VI extends in the axial direction and passes through the second peak Bm2 of the locus LBm. FIG. 6 shows a cross-section of the middle circumferential groove 10m at the second peak Bm2. In FIG. 6, the left side of the groove width center line HM is the first end TE1 side of the tread surface 6.

As shown in FIG. 6, the groove bottom PBm is located on the second end TE2 side of the tread surface 6 with respect to the groove width center line HM in the axial direction.

In the center circumferential groove 10c shown in FIG. 2, the pair of edges 14 included in the opening thereof extend straight.

As shown in FIG. 4, each edge 14c of the center circumferential groove 10c may extend in a zigzag manner. Although not shown, the edge 14c may extend in a wavy manner.

In the center circumferential groove 10c shown in FIG. 4, each edge 14c includes a plurality of peaks Ec closer to the first end TE1 or the second end TE2 of the tread surface 6, and these peaks Ec are arranged at equal intervals in the circumferential direction. The peaks Ec closer to the first end TE1 of the tread surface 6 (hereinafter, first peaks Ec1) and the peaks Ec closer to the second end TE2 of the tread surface 6 (hereinafter, second peaks Ec2) are arranged alternately in the circumferential direction. The edge 14c extends in a zigzag manner while alternately passing through the first peaks Ec1 and the second peaks Ec2.

Although not shown, in the case where the edge 14c extends in a wavy manner, the edge 14c extends in a wavy manner while alternately passing through the first peaks Ec1 and the second peaks Ec2.

In the center circumferential groove 10c shown in FIG. 4, the positions in the circumferential direction of the first peaks Ec1 and the second peaks Ec2 in the edge 14c on the first end TE1 side included in the opening thereof coincide with the positions in the circumferential direction of the first peaks Ec1 and the second peaks Ec2 in the edge 14c on the second end TE2 side included in the opening thereof.

If the number of peaks Ec included in the edge 14c on the first end TE1 side and the number of peaks Ec included in the edge 14c on the second end TE2 side are the same, the positions in the circumferential direction of the first peaks Ec1 and the second peaks Ec2 in the edge 14c on the second end TE2 side may be displaced relative to the positions in the circumferential direction of the first peaks Ec1 and the second peaks Ec2 in the edge 14c on the first end TE1 side.

In FIG. 4, a length indicated by reference character Ac is the distance in the axial direction from the first peak Ec1 to the second peak Ec2 in the edge 14c of the center circumferential groove 10c. The distance Ac in the axial direction is the amplitude of the edge 14c of the center circumferential groove 10c. Since each edge 14c of each center circumferential groove 10c shown in FIG. 1 extends straight, the amplitude Ac thereof is 0 (zero) mm.

In FIG. 2, an alternate long and short dash line LBc represents the locus of a groove bottom PBc of the center circumferential groove 10c. The locus LBc of the groove bottom PBc extends in a zigzag manner. The locus LBc includes a plurality of peaks Bc closer to the first end TE1 or the second end TE2 of the tread surface 6, and these peaks Bc are arranged at equal intervals in the circumferential direction. The peaks Bc closer to the first end TE1 of the tread surface 6 (hereinafter, first peaks Bc1) and the peaks Bc closer to the second end TE2 of the tread surface 6 (hereinafter, second peaks Bc2) are arranged alternately in the circumferential direction. The locus LBc extends in a zigzag manner while alternately passing through the first peaks Bc1 and the second peaks Bc2.

Although not shown, the locus LBc may extend in a wavy manner. In this case, the locus LBc extends in a wavy manner while alternately passing through the first peaks Bc1 and the second peaks Bc2.

The locus LBc of the groove bottom PBc shown in FIG. 4 has the same configuration as the locus LBc of the groove bottom PBc shown in FIG. 2. The locus LBc in FIG. 4 also extends in a zigzag manner while alternately passing through the first peaks Bc1 and the second peaks Bc2.

In FIG. 4, the positions in the circumferential direction of the first peaks Bc1 and the second peaks Bc2 in the locus LBc of the groove bottom PBc coincide with the positions in the circumferential direction of the first peaks Ec1 and the second peaks Ec2 in the edge 14c of the opening.

If the number of peaks Bc included in the locus LBc of the groove bottom PBc and the number of peaks Ec included in the edge 14c of the opening are the same, the positions in the circumferential direction of the first peaks Bc1 and the second peaks Bc2 in the locus LBc of the groove bottom PBc may be displaced relative to the positions in the circumferential direction of the first peaks Ec1 and the second peaks Ec2 in the edge 14c.

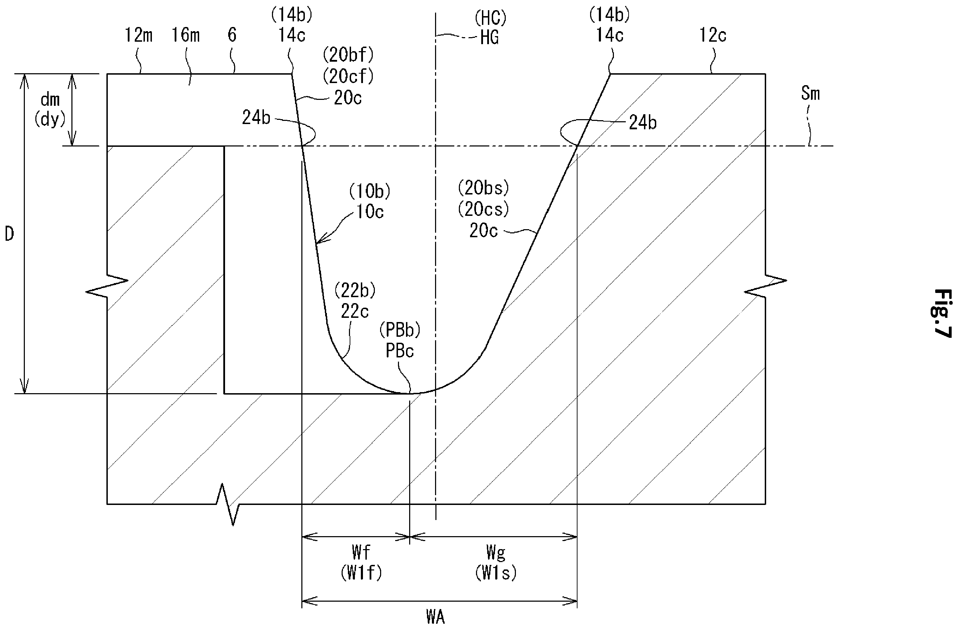

FIG. 7 is a cross-sectional view taken along a line VII-VII in FIG. 2. In FIG. 2, the line VII-VII extends in the axial direction and passes through the first peak Bc1 of the locus LBc. FIG. 7 shows a cross-section of the center circumferential groove 10c at the first peak Bc1. In FIG. 7, the left side of the groove width center line HG of the center circumferential groove 10c (hereinafter, groove width center line HC) is the first end TE1 side of the tread surface 6.

The center circumferential groove 10c includes a pair of groove walls 20c and a groove bottom portion 22c connecting both groove walls 20c. The groove bottom portion 22c has the groove bottom PBc.

As shown in FIG. 7, the groove bottom PBc is located on the first end TE1 side of the tread surface 6 with respect to the groove width center line HC in the axial direction.

In FIG. 7, an alternate long and two short dashes line Sm represents a plane including the groove bottom of the middle lateral groove 16m. If the middle land portion 12m is worn to the plane Sm including the groove bottom of the middle lateral groove 16m, the middle lateral groove 16m disappears. Since the middle lateral groove 16m is shallower than the center circumferential groove 10c and the middle circumferential groove 10m, even if the middle lateral groove 16m disappears, the center circumferential groove 10c and the middle circumferential groove 10m remain.

In the present invention, the plane including the groove bottom of the lateral groove 16 means a virtual plane obtained by virtually cutting the tread 4 at a position away from the tread surface 6 by a distance equal to the depth of the lateral groove 16. The plane including the groove bottom of the lateral groove 16 indicates a virtual tread pattern of the tread 4 that is worn until the lateral groove 16 disappears.

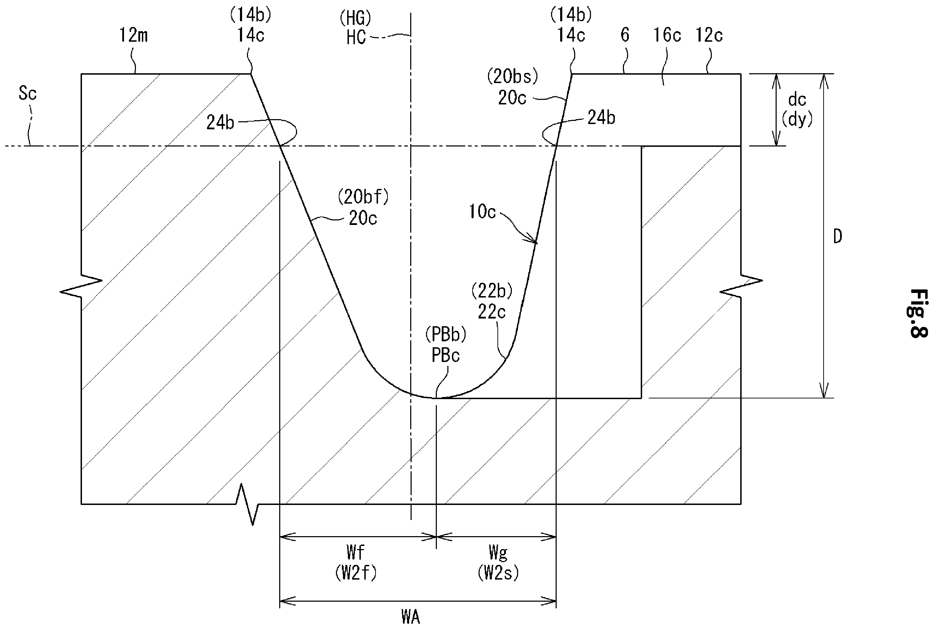

FIG. 8 is a cross-sectional view taken along a line VIII-VIII in FIG. 2. In FIG. 2, the line VIII-VIII extends in the axial direction and passes through the second peak Bc2 of the locus LBc. FIG. 8 shows a cross-section of the center circumferential groove 10c at the second peak Bc2. In FIG. 8, the left side of the groove width center line HC is the first end TE1 side of the tread surface 6.

As shown in FIG. 8, the groove bottom PBc is located on the second end TE2 side of the tread surface 6 with respect to the groove width center line HC in the axial direction.

In FIG. 8, an alternate long and two short dashes line Sc represents a plane including the groove bottom of the crown lateral groove 16c. If the crown land portion 12c is worn to the plane Sc including the groove bottom of the crown lateral groove 16c, the crown lateral groove 16c disappears. Since the crown lateral groove 16c is shallower than the center circumferential groove 10c and the middle circumferential groove 10m, even if the crown lateral groove 16c disappears, the center circumferential groove 10c and the middle circumferential groove 10m remain.

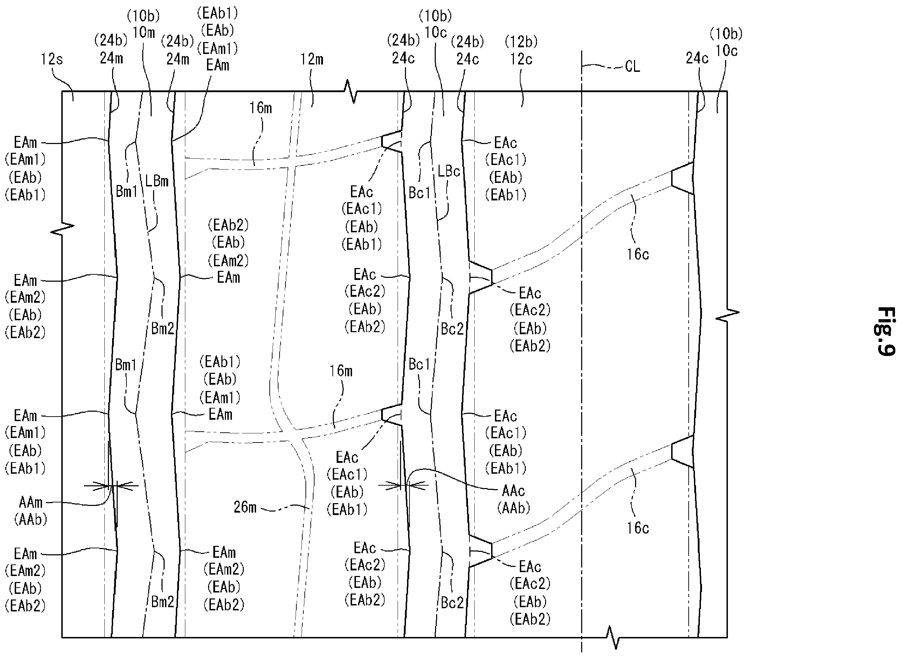

FIG. 9 shows a virtual tread pattern obtained by virtually cutting the tread 4 along a plane including the groove bottom of each lateral groove 16.

As described above, in the tread 4 shown in FIG. 1, each middle lateral groove 16m has the same depth as each crown lateral groove 16c. The virtual tread pattern shown in FIG. 9 virtually represents a tread pattern when the tread 4 is worn to a plane including the groove bottoms of the middle lateral grooves 16m and the crown lateral grooves 16c and the middle lateral grooves 16m and the crown lateral grooves 16c disappear.

The opening of each circumferential groove 10 shown in FIG. 9 is also referred to as virtual opening. A pair of edges 24 included in the virtual opening are also referred to as virtual edges.

The virtual edges 24 are the edges of the circumferential groove 10 that appear due to wear of the tread 4. The shapes of the virtual edges 24 reflect the shapes of the groove walls 20 of the circumferential groove 10.

As shown in FIG. 9, the virtual opening of the middle circumferential groove 10m includes a pair of virtual edges 24m extending in a zigzag manner. Each virtual edge 24m includes a plurality of virtual peaks EAm closer to the first end TE1 or the second end TE2 of the tread surface 6. The virtual peaks EAm closer to the first end TE1 of the tread surface 6 (hereinafter, first virtual peaks EAm1) and the virtual peaks EAm closer to the second end TE2 of the tread surface 6 (hereinafter, second virtual peaks EAm2) are arranged alternately in the circumferential direction. The virtual edge 24m extends in a zigzag manner while alternately passing through the first virtual peaks EAm1 and the second virtual peaks EAm2.

Although not shown, the virtual edge 24m may extend in a wavy manner. In this case, the virtual edge 24m extends in a wavy manner while alternately passing through the first virtual peaks EAm1 and the second virtual peaks EAm2.

In FIG. 9, a length indicated by reference character AAm is the distance in the axial direction from the first virtual peak EAm1 to the second virtual peak EAm2 in the virtual edge 24m of the middle circumferential groove 10m. The distance AAm in the axial direction is the amplitude of the virtual edge 24m of the middle circumferential groove 10m.

As described above, the shapes of the virtual edges 24 reflect the shapes of the groove walls 20 of the circumferential groove 10. Each virtual edge 24m of the virtual opening of the middle circumferential groove 10m does not extend straight but extends in a zigzag manner. Each groove wall 20m of the middle circumferential groove 10m has irregularities that reflect the zigzag shape of the virtual edge 24m. In other words, each groove wall 20m of the middle circumferential groove 10m is not flat.

The virtual opening of each center circumferential groove 10c includes a pair of virtual edges 24c extending in a zigzag manner. Each virtual edge 24c includes a plurality of virtual peaks EAc closer to the first end TE1 or the second end TE2 of the tread surface 6. The virtual peaks EAc closer to the first end TE1 of the tread surface 6 (hereinafter, first virtual peaks EAc1) and the virtual peaks EAc closer to the second end TE2 of the tread surface 6 (hereinafter, second virtual peaks EAc2) are arranged alternately in the circumferential direction. The virtual edge 24c extends in a zigzag manner while alternately passing through the first virtual peaks EAc1 and the second virtual peaks EAc2.

Although not shown, the virtual edge 24c may extend in a wavy manner. In this case, the virtual edge 24c extends in a wavy manner while alternately passing through the first virtual peaks EAc1 and the second virtual peaks EAc2.

In FIG. 9, a length indicated by reference character AAc is the distance in the axial direction from the first virtual peak EAc1 to the second virtual peak EAc2 in the virtual edge 24c of the center circumferential groove 10c. The distance AAc in the axial direction is the amplitude of the virtual edge 24c of the center circumferential groove 10c.

Each virtual edge 24c of the virtual opening of the center circumferential groove 10c does not extend straight but extends in a zigzag manner. Each groove wall 20c of the center circumferential groove 10c has irregularities that reflect the zigzag shape of the virtual edge 24c. In other words, each groove wall 20c of the center circumferential groove 10c is not flat.

In the present invention, a circumferential groove 10 having non-flat groove walls 20 is also referred to as irregular circumferential groove 10b. In the tread 4 shown in FIG. 1, the center circumferential grooves 10c and the middle circumferential grooves 10m are irregular circumferential grooves 10b.

As described above, the crown land portion 12c and the middle land portions 12m of the tread 4 are the block-shaped land portions 12b. The crown land portion 12c is present between the two center circumferential grooves 10c, and the middle land portions 12m are present between the center circumferential grooves 10c and the middle circumferential grooves 10m.

The circumferential grooves 10 located on both sides of each block-shaped land portion 12b are irregular circumferential grooves 10b.

The crown lateral grooves 16c provided on the crown land portion 12c are shallower than the center circumferential grooves 10c and the middle circumferential grooves 10m, and the middle lateral grooves 16m provided on the middle land portions 12m are shallower than the center circumferential grooves 10c and the middle circumferential grooves 10m.

Lateral grooves 16b provided on the block-shaped land portion 12b are shallower than the irregular circumferential grooves 10b.

The opening of each center circumferential groove 10c includes a pair of edges 14c extending straight or in a zigzag or wavy manner, and the opening of each middle circumferential groove 10m includes a pair of edges 14m extending straight or in a zigzag or wavy manner.

The opening of each irregular circumferential groove 10b includes a pair of edges 14b extending straight or in a zigzag or wavy manner.

In the case where the pair of edges 14b extend in a zigzag or wavy manner, each edge 14b includes a plurality of peaks Eb closer to the first end TE1 or the second end TE2 of the tread surface 6. The peaks Eb closer to the first end TE1 of the tread surface 6 (hereinafter, first peaks Eb1) and the peaks Eb closer to the second end TE2 of the tread surface 6 (hereinafter, second peaks Eb2) are arranged alternately in the circumferential direction.

The virtual opening of each center circumferential groove 10c obtained by virtually cutting the tread 4 along a plane including the groove bottoms of the crown lateral grooves 16c provided on the crown land portion 12c includes a pair of virtual edges 24c extending in a zigzag or wavy manner. The virtual opening of each middle circumferential groove 10m obtained by virtually cutting the tread 4 along a plane including the groove bottoms of the middle lateral grooves 16m provided on the middle land portion 12m includes a pair of virtual edges 24m extending in a zigzag or wavy manner.

The virtual opening of each irregular circumferential groove 10b obtained by virtually cutting the tread 4 along a plane including the groove bottoms of the lateral grooves 16b provided on the block-shaped land portion 12b includes a pair of virtual edges 24b extending in a zigzag or wavy manner.

The pair of virtual edges 24b each include a plurality of virtual peaks EAb closer to the first end TE1 or the second end TE2 of the tread surface 6, and the virtual peaks EAb closer to the first end TE1 of the tread surface 6 (hereinafter, first virtual peaks EAb1) and the virtual peaks EAb closer to the second end TE2 of the tread surface 6 (hereinafter, second virtual peaks EAb2) are arranged alternately in the circumferential direction.

As described above, the center circumferential grooves 10c and the middle circumferential grooves 10m are the irregular circumferential grooves 10b.

The amplitude Ac of the edge 14c of the center circumferential groove 10c and the amplitude Am of the edge 14m of the middle circumferential groove 10m shown in FIG. 4 are amplitudes Ab of the edges 14b of the irregular circumferential grooves 10b. The amplitudes Ab are each the distance in the axial direction from the first peak Eb1 to the second peak Eb2 of the edge 14b. Since the edges 14b of the irregular circumferential grooves 10b in the tread pattern shown in FIG. 1 extend straight, the amplitudes Ab thereof are 0 (zero) mm.

The amplitude AAc of the virtual edge 24c of the center circumferential groove 10c and the amplitude AAm of the virtual edge 24m of the middle circumferential groove 10m shown in FIG. 9 are amplitudes AAb of the virtual edges 24b of the irregular circumferential grooves 10b. The amplitudes AAb are each the distance in the axial direction from the first virtual peak EAb1 to the second virtual peak EAb2 of the virtual edge 24b.

In the tread 4 shown in FIG. 1, in the case where the crown lateral grooves 16c are deeper than the middle lateral grooves 16m, the amplitude AAc of the virtual edge 24c of the center circumferential groove 10c is used as the amplitude AAb of the virtual edge 24b of the irregular circumferential groove 10b. In the case where the crown lateral grooves 16c are shallower than the middle lateral grooves 16m, the amplitude AAm of the virtual edge 24m of the middle circumferential groove 10m is used as the amplitude AAb of the virtual edge 24b of the irregular circumferential groove 10b.

In the tire 2, the crown land portion 12c and/or each middle land portion 12m is a block-shaped land portion 12b, and the circumferential grooves 10 located on both sides of the block-shaped land portion 12b are irregular circumferential grooves 10b.

The block-shaped land portion 12b has lateral grooves 16b aligned in the circumferential direction. Each lateral groove 16b extends substantially in the axial direction. The edges of the lateral groove 16b serve as an edge component that scratches a road surface. The block-shaped land portion 12b can contribute to improvement of wet performance.

From this viewpoint, as in the tread 4 shown in FIG. 1, the crown land portion 12c and each middle land portion 12m are preferably block-shaped land portions 12b.

As described above, the lateral grooves 16b formed on the block-shaped land portion 12b are shallower than the irregular circumferential grooves 10b. The block-shaped land portion 12b can have required stiffness. The tire 2 can suppress excessive deformation of the block-shaped land portion 12b. The tire 2 can suppress an increase in rolling resistance and a decrease in wear resistance.

Since the lateral grooves 16b are shallow, if the tread 4 is worn, the lateral grooves 16b disappear before the irregular circumferential grooves 10b. In this case, there is a concern about a decrease in wet performance.

However, in the tire 2, at each irregular circumferential groove 10b, the amplitude AAb of each virtual edge 24b is larger than the amplitude Ab of each edge 14b. The edges of the irregular circumferential groove 10b that appear due to wear of the tread 4 can effectively contribute as an edge component. The virtual edges 24b of the irregular circumferential groove 10b which appear due to wear of the tread 4 compensate for the edge component that is reduced due to disappearance of the lateral grooves 16b. The tire 2 can suppress a decrease in wet performance.

As shown in FIG. 9, in the crown land portion 12c, the second virtual peaks EAc2 of the virtual edge 24c are located near the ends on the first end TE1 side of the crown lateral grooves 16c. The first virtual peaks EAc1 are located between two adjacent crown lateral grooves 16c. The number of virtual peaks EAc included in the virtual edge 24c is larger than the number of crown lateral grooves 16c included in the crown land portion 12c.

In the middle land portion 12m, the first virtual peaks EAm1 of the virtual edge 24m are located near the ends on the first end TE1 side of the middle lateral grooves 16m. The second virtual peak EAm2 is located between two adjacent middle lateral grooves 16m. The number of virtual peaks EAm included in the virtual edge 24m is larger than the number of middle lateral grooves 16m included in the middle land portion 12m.

The number of virtual peaks EAb included in each virtual edge 24b in each irregular circumferential groove 10b is larger than the number of lateral grooves 16b included in the block-shaped land portion 12b. The virtual edges 24b of the irregular circumferential groove 10b which appear due to wear of the tread 4 effectively compensate for the edge component that is reduced due to disappearance of the lateral grooves 16b. The virtual edges 24b can contribute to improvement of wet performance. The tire 2 can stably exhibit good wet performance.

The tire 2 can stably exhibit good wet performance while suppressing an increase in rolling resistance and a decrease in wear resistance.

For example, as shown in FIG. 5, the middle circumferential groove 10m includes a first groove wall 20mf on the first end TE1 side, a second groove wall 20ms on the second end TE2 side, and a groove bottom portion 22m connecting the first groove wall 20mf and the second groove wall 20ms and having a groove bottom PBm. The first groove wall 20mf and the second groove wall 20ms are non-flat groove walls. As shown in FIG. 7, the center circumferential groove 10c includes a first groove wall 20cf on the first end TE1 side, a second groove wall 20cs on the second end TE2 side, and a groove bottom portion 22c connecting the first groove wall 20cf and the second groove wall 20cs and having a groove bottom PBc. The first groove wall 20cf and the second groove wall 20cs are non-flat groove walls.

The irregular circumferential groove 10b includes a first groove wall 20bf on the first end TE1 side, a second groove wall 20bs on the second end TE2 side, and a groove bottom portion 22b connecting the first groove wall 20bf and the second groove wall 20bs and having a groove bottom PBb, and the first groove wall 20bf and the second groove wall 20bs are non-flat groove walls.

As described above, the locus LBm of the groove bottom PBm of the middle circumferential groove 10m extends in a zigzag or wavy manner while alternately passing through the first peak Bm1 and the second peak Bm2. The locus LBc of the groove bottom PBc of the center circumferential groove 10c extends in a zigzag or wavy manner while alternately passing through the first peaks Bc1 and the second peaks Bc2.

The locus LBc of the groove bottom PBb in the irregular circumferential groove 10b extends in a zigzag or wavy manner while alternately passing through first peaks Bb1 closer to the first end TE1 of the tread surface 6 and second peaks Bb2 closer to the second end TE2 of the tread surface 6.

As shown in FIG. 5 to FIG. 8, the first groove wall 20bf and the second groove wall 20bs of the irregular circumferential groove 10b are each inclined with respect to a normal line of the tread surface 6 at the edge 14b of the irregular circumferential groove 10b.

In FIG. 5, an angle θ1f is an angle of an extension line of the first groove wall 20bf at the first peak Bb1 of the locus LBc of the groove bottom PBb with respect to a normal line of the tread surface 6 at the edge 14b. The angle θ1f is the inclination angle of the first groove wall 20bf at the first peak Bb1. An angle θ1s is the inclination angle of the second groove wall 20bs at the first peak Bb1.

In FIG. 6, an angle θ2f is an angle of an extension line of the first groove wall 20bf at the second peak Bb2 of the locus LBc of the groove bottom PBb with respect to a normal line of the tread surface 6 at the edge 14b. The angle θ2f is the inclination angle of the first groove wall 20bf at the second peak Bb2. An angle θ2s is the inclination angle of the second groove wall 20bs at the second peak Bb2.

As shown in FIG. 5 and FIG. 6, in the tire 2, the inclination angle θ1f of the first groove wall 20bf at the first peak Bb1 is smaller than the inclination angle θ1s of the second groove wall 20bs, and the inclination angle θ2f of the first groove wall 20bf at the second peak Bb2 is larger than the inclination angle θ2s of the second groove wall 20bs. Accordingly, in a state where the tread 4 is worn, the second groove wall 20bs can effectively serve as an edge component at each first peak Bb1, and the first groove wall 20bf can effectively serve as an edge component at each second peak Bb2. The first groove wall 20bf and the second groove wall 20bs of the irregular circumferential groove 10b can effectively contribute to improvement of wet performance. From this viewpoint, preferably, the inclination angle θ1f of the first groove wall 20bf at the first peak Bb1 is smaller than the inclination angle θ1s of the second groove wall 20bs, and the inclination angle θ2f of the first groove wall 20bf at the second peak Bb2 is larger than the inclination angle θ2s of the second groove wall 20bs.

In FIG. 7 and FIG. 8, a length indicated by reference character WA is the opening width of the virtual opening of the irregular circumferential groove 10b. The opening width WA is represented as the distance in the axial direction from the virtual edge 24b on the first end TE1 side to the virtual edge 24b on the second end TE2 side of the tread surface 6. A length indicated by reference character Wf is also referred to as first opening width. The first opening width Wf is represented as the distance in the axial direction from the groove bottom PBb to the virtual edge 24b on the first end TE1 side. A length indicated by reference character Ws is also referred to as second opening width. The second opening width Ws is represented as the distance in the axial direction from the groove bottom PBb to the virtual edge 24b on the second end TE2 side.

The sum of the first opening width Wf and the second opening width Ws is equal to the opening width WA.

The first opening width Wf at the first peak Bb1 in FIG. 7 is also referred to as first opening width W1f, and the first opening width Wf at the second peak Bb2 in FIG. 8 is also referred to as first opening width W2f. The second opening width Ws at the first peak Bb1 in FIG. 7 is also referred to as second opening width W1s, and the second opening width Ws at the second peak Bb2 in FIG. 8 is also referred to as second opening width W2s.

As shown in FIG. 5 and FIG. 7, the groove bottom PBb of the irregular circumferential groove 10b at the first peak Bb1 is located on the first end TE1 side of the tread surface 6 with respect to the groove width center line HG in the axial direction. As shown in FIG. 6 and FIG. 8, the groove bottom PBb at the second peak Bb2 is located on the second end TE2 side of the tread surface 6 with respect to the groove width center line HG in the axial direction.

At the virtual opening of the irregular circumferential groove 10b, the first opening width W1f is narrower than the second opening width W1s at the first peak Bb1 as shown in FIG. 7. At the second peak Bb2, the first opening width W2f is wider than the second opening width W2s as shown in FIG. 8. In a state where the tread 4 is worn, the second groove wall 20bs mainly serves as an edge component at each first peak Bb1, and the first groove wall 20bf mainly serves as an edge component at each second peak Bb2. Since the first peaks Bb1 and the second peaks Bb2 are arranged alternately in the circumferential direction, the first groove wall 20bf and the second groove wall 20bs alternately serve as an edge component. In the tire 2, even if the tread 4 is worn, the edges of the irregular circumferential groove 10b can effectively contribute to improvement of wet performance. From this viewpoint, at the virtual opening of the irregular circumferential groove 10b, preferably, the first opening width W1f is narrower than the second opening width W1s at each first peak Bb1, and the first opening width W2f is wider than the second opening width W2s at each second peak Bb2.

From the viewpoint that the irregular circumferential groove 10b can effectively contribute to improvement of wet performance while maintaining the stiffness at each virtual edge 24b of the irregular circumferential groove 10b, the ratio (W1s/W1f) of the second opening width W1s to the first opening width W1f at each first peak Bb1 is more preferably not less than 1.30 and not greater than 2.20. The ratio (W1s/W1f) is further preferably not less than 1.50 and not greater than 2.00.

From the same viewpoint, the ratio (W2f/W2s) of the first opening width W2f to the second opening width W2s at each second peak Bb2 is more preferably not less than 1.30 and not greater than 2.20. The ratio (W2f/W2s) is further preferably not less than 1.50 and not greater than 2.00.

From the viewpoint that the irregular circumferential groove 10b can more effectively contribute to improvement of wet performance while ensuring sufficient stiffness at each virtual edge 24b of the irregular circumferential groove 10b, further preferably, the ratio (W1s/W1f) of the second opening width W1s to the first opening width W1f at each first peak Bb1 is not less than 1.30 and not greater than 2.20, and the ratio (W2f/W2s) of the first opening width W2f to the second opening width W2s at each second peak Bb2 is not less than 1.30 and not greater than 2.20.

In FIG. 7 and FIG. 8, a length indicated by reference character D is the depth of the center circumferential groove 10c. Since the center circumferential groove 10c is an irregular circumferential groove 10b, the depth D is the depth of the irregular circumferential groove 10b.

In FIG. 7, a length indicated by reference character dm is the depth of the middle lateral groove 16m. In FIG. 8, a length indicated by reference character dc is the depth of the crown lateral groove 16c. The middle lateral groove 16m and the crown lateral groove 16c are lateral grooves 16b formed on the block-shaped land portions 12b. The depth dm and the depth dc are the depths of the lateral grooves 16b formed on the block-shaped land portions 12b, and the depth of each lateral groove 16b is represented by a depth dy.

As described above, the lateral grooves 16b provided on each block-shaped land portion 12b are shallower than the irregular circumferential grooves 10b. If the lateral grooves 16b are excessively deep, the stiffness of the block-shaped land portion 12b is decreased, which may result in a decrease in wear resistance or an increase in rolling resistance. If the lateral grooves 16b are excessively shallow, the timing when the lateral grooves 16b disappear due to wear becomes earlier, so that the lateral grooves 16b cannot sufficiently contribute to exhibiting wet performance.

In the tire 2, the ratio (dy/D) of the depth dy of each lateral groove 16b provided on the block-shaped land portion 12b to the depth D of each irregular circumferential groove 10b is preferably not less than 0.12 and not greater than 0.32.

When the ratio (dy/D) is set to be not less than 0.12, the lateral groove 16b can effectively contribute to exhibiting wet performance. From this viewpoint, the ratio (dy/D) is more preferably not less than 0.17.

When the ratio (dy/D) is set to be not greater than 0.32, the influence of the lateral groove 16b on the stiffness of the block-shaped land portion 12b is suppressed. The lateral groove 16b can effectively contribute to the tire 2 maintaining low rolling resistance and good wear resistance. From this viewpoint, the ratio (dy/D) is more preferably not greater than 0.27.

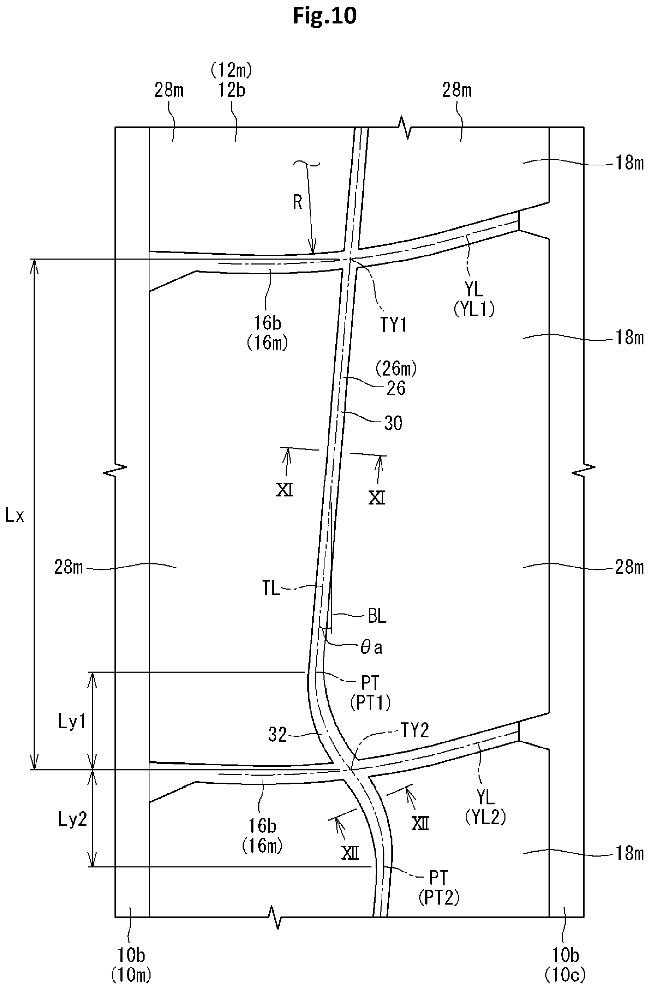

FIG. 10 shows a part of the tread pattern in FIG. 1. Specifically, FIG. 10 shows a part of the middle land portion 12m as a block-shaped land portion 12b.

In addition to the middle lateral grooves 16m as the lateral grooves 16b provided on the block-shaped land portion 12b, the middle land portion 12m has a longitudinal groove 26 (hereinafter, also referred to as middle longitudinal groove 26m). The middle land portion 12m has the middle lateral grooves 16m and the middle longitudinal groove 26m. The middle longitudinal groove 26m continuously extends in the circumferential direction. The middle longitudinal groove 26m is shallower than the irregular circumferential groove 10b.

As described above, the middle land portion 12m includes the plurality of blocks 18m. The middle longitudinal groove 26m divides each block 18m (specifically, a portion including the top surface of the block 18m) into two sub-blocks 28m.

The middle longitudinal groove 26m includes first middle longitudinal grooves 30 and second middle longitudinal grooves 32.

Each first middle longitudinal groove 30 extends straight. The first middle longitudinal groove 30 is inclined with respect to the circumferential direction. Each second middle longitudinal groove 32 is also inclined with respect to the circumferential direction. However, the second middle longitudinal groove 32 is inclined in a direction opposite to the direction of inclination of the first middle longitudinal groove 30. In the circumferential direction, the first middle longitudinal grooves 30 and the second middle longitudinal grooves 32 are alternately arranged.

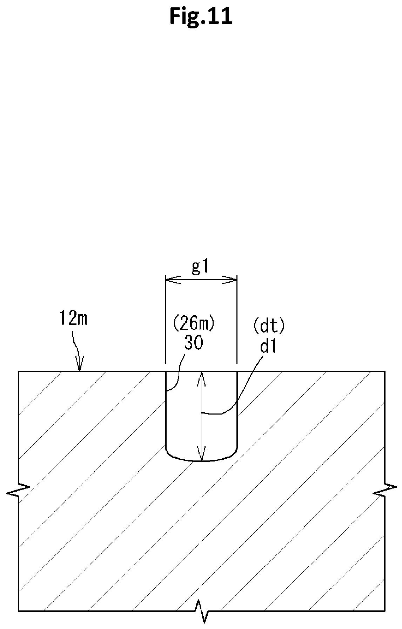

FIG. 11 shows a cross-section taken along a line XI-XI in FIG. 10. FIG. 11 shows a cross-section of the first middle longitudinal groove 30. In FIG. 11, a length indicated by reference character g1 is the groove width of the first middle longitudinal groove 30. A length indicated by reference character d1 is the depth of the first middle longitudinal groove 30.

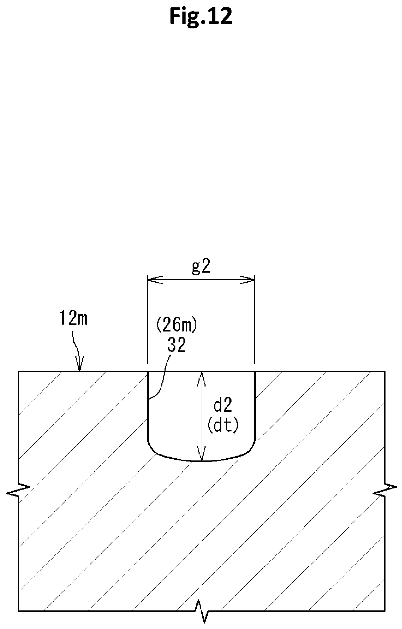

FIG. 12 shows a cross-section taken along a line XII-XII in FIG. 10. FIG. 12 shows a cross-section of the second middle longitudinal groove 32. In FIG. 12, a length indicated by reference character g2 is the groove width of the second middle longitudinal groove 32. A length indicated by reference character d2 is the depth of the second middle longitudinal groove 32.

In the tire 2, the groove width g1 of the first middle longitudinal groove 30 is narrower than the groove width of the lateral groove 16b. In consideration of drainage performance, the groove width g1 of the first middle longitudinal groove 30 is set to be not less than 0.5 times the groove width of the lateral groove 16b. The groove width g2 of the second middle longitudinal groove 32 is wider than the groove width of the lateral groove 16b. In consideration of the influence of the second middle longitudinal groove 32 on stiffness, the groove width g2 of the second middle longitudinal groove 32 is set to be not greater than 1.5 times the groove width of the lateral groove 16b.

The depth d1 of the first middle longitudinal groove 30 and the depth d2 of the second middle longitudinal groove 32 are the same. The depth d1 and the depth d2 are each the depth of the middle longitudinal groove 26m provided on the middle land portion 12m as the block-shaped land portion 12b. The depth of the middle longitudinal groove 26m is represented by a depth dt. The depth dt of the middle longitudinal groove 26m is the same as the depth dy of the lateral groove 16b. The depth dt being the same as the depth dy means that the ratio (dt/dy) of the depth dt to the depth dy is not less than 0.95 and not greater than 1.05.

In the middle land portion 12m as the block-shaped land portion 12b, the middle longitudinal groove 26m provided in addition to the middle lateral grooves 16m as the lateral grooves 16b also serves as an edge component. Due to the synergistic effect of the middle lateral grooves 16m and the middle longitudinal groove 26m, the tire 2 can have improved wet performance. As described above, the middle longitudinal groove 26m is shallower than the irregular circumferential groove 10b. Even though the middle longitudinal groove 26m is provided in addition to the middle lateral grooves 16m, the middle land portion 12m can have required stiffness. The tire 2 can suppress excessive deformation of the middle land portion 12m. The tire 2 can suppress an increase in rolling resistance and a decrease in wear resistance.

From this viewpoint, preferably, in addition to the middle lateral grooves 16m as the lateral grooves 16b, the middle land portion 12m as the block-shaped land portion 12b has the middle longitudinal groove 26m extending continuously in the circumferential direction and shallower than the irregular circumferential groove 10b.

In the tire 2, the ratio (dt/D) of the depth dt of each middle longitudinal groove 26m to the depth D of the irregular circumferential groove 10b is preferably not less than 0.12 and not greater than 0.32.

When the ratio (dt/D) is set to be not less than 0.12, the middle longitudinal groove 26m can effectively contribute to exhibiting wet performance. From this viewpoint, the ratio (dt/D) is more preferably not less than 0.17.

When the ratio (dt/D) is set to be not greater than 0.32, the influence of the middle longitudinal groove 26m on the stiffness of the middle land portion 12m as the block-shaped land portion 12b is suppressed. The middle longitudinal groove 26m can effectively contribute to the tire 2 maintaining low rolling resistance and good wear resistance. From this viewpoint, the ratio (dt/D) is more preferably not greater than 0.27.

The directions of inclination of the first middle longitudinal grooves 30 and the second middle longitudinal grooves 32 are different from each other, but the first middle longitudinal grooves 30 and the second middle longitudinal grooves 32 are inclined with respect to the circumferential direction. The middle longitudinal groove 26m including the first middle longitudinal grooves 30 and the second middle longitudinal grooves 32 serves as an edge component. The middle longitudinal groove 26m can contribute to improvement of wet performance. From this viewpoint, preferably, the middle longitudinal groove 26m includes the first middle longitudinal grooves 30 inclined with respect to the circumferential direction and the second middle longitudinal grooves 32 inclined in a direction opposite to the direction of inclination of the first middle longitudinal grooves 30, and the first middle longitudinal grooves 30 and the second middle longitudinal grooves 32 are arranged alternately in the circumferential direction.

In FIG. 10, an alternate long and short dash line TL is a center line of the groove width of the middle longitudinal groove 26m.

As shown in FIG. 10, the middle longitudinal groove 26m is curved at a boundary portion between the first middle longitudinal groove 30 and the second middle longitudinal groove 32. As described above, each first middle longitudinal groove 30 extends straight. In FIG. 10, each position indicated by reference character PT is a position at which the center line TL of the groove width of the middle longitudinal groove 26m changes from a straight line to a curved line. In the present invention, the position PT is the boundary between the first middle longitudinal groove 30 and the second middle longitudinal groove 32.

In FIG. 10, an angle θa is an angle of a straight portion of the center line TL of the groove width with respect to the circumferential direction. In the present invention, the angle θa is the inclination angle of the first middle longitudinal groove 30.

The inclination angle θa of the first middle longitudinal groove 30 is preferably not less than 4 degrees and not greater than 12 degrees. Accordingly, the first middle longitudinal groove 30 can effectively serve as an edge component. The first middle longitudinal groove 30 can contribute to improvement of wet performance. From this viewpoint, the inclination angle θa of the first middle longitudinal groove 30 is more preferably not less than 8 degrees and not greater than 12 degrees.

Each second middle longitudinal groove 32 is also inclined with respect to the circumferential direction, and the inclination angle of the second middle longitudinal groove 32 is set as appropriate on the basis of the inclination angle θa of the first middle longitudinal groove 30 and the position of the boundary PT between the first middle longitudinal groove 30 and the second middle longitudinal groove 32.

For example, as shown in FIG. 10, each of the first middle longitudinal grooves 30 and the second middle longitudinal grooves 32 intersects the middle lateral groove 16m. The first middle longitudinal grooves 30 and the second middle longitudinal grooves 32 are arranged alternately in the circumferential direction. Each second middle longitudinal groove 32 intersects the middle lateral groove 16m located next to the middle lateral groove 16m that the first middle longitudinal groove 30 intersects. The first middle longitudinal grooves 30 and the second middle longitudinal grooves 32 alternately intersect the plurality of middle lateral grooves 16m aligned in the circumferential direction. Each middle lateral groove 16m extends between the middle longitudinal groove 26m and the irregular circumferential groove 10b. Draining of water in the middle longitudinal groove 26m into the irregular circumferential groove 10b is promoted. Each of the first middle longitudinal grooves 30 and the second middle longitudinal grooves 32 can effectively serve as an edge component. The tire 2 can have improved wet performance. From this viewpoint, preferably, the first middle longitudinal grooves 30 and the second middle longitudinal grooves 32 alternately intersect the plurality of middle lateral grooves 16m aligned in the circumferential direction.

In FIG. 10, each alternate long and short dash line YL is a center line of the groove width of the middle lateral groove 16m. The center line YL of the groove width of the middle lateral groove 16m that intersects the first middle longitudinal groove 30 is also referred to as center line YL1, and the center line YL of the groove width of the middle lateral groove 16m that intersects the second middle longitudinal groove 32 is also referred to as center line YL2.

A position indicated by reference character TY1 is the point of intersection of the center line TL of the groove width of the middle longitudinal groove 26m and the center line YL1 of the groove width of the middle lateral groove 16m. The point of intersection TY1 is the position of intersection of the first middle longitudinal groove 30 and the middle lateral groove 16m.

A position indicated by reference character TY2 is the point of intersection of the center line TL of the groove width of the middle longitudinal groove 26m and the center line YL2 of the groove width of the middle lateral groove 16m. The point of intersection TY2 is the position of intersection of the second middle longitudinal groove 32 and the middle lateral groove 16m.

In FIG. 10, a length indicated by reference character Lx is the distance in the circumferential direction from the position of intersection TY1 to the position of intersection TY2. The distance Lx in the circumferential direction is the distance in the circumferential direction between adjacent middle lateral grooves 16m. A length indicated by reference character Ly1 is the distance in the circumferential direction from the position of intersection TY2 to the boundary PT, between the first middle longitudinal groove 30 and the second middle longitudinal groove 32, located between the two middle lateral grooves 16m that define the distance Lx in the circumferential direction. A length indicated by reference character Ly2 is the distance in the circumferential direction from the position of intersection TY2 to the boundary PT (hereinafter, also referred to as second boundary PT2) located on the side opposite to the boundary PT (hereinafter, also referred to as first boundary PT1), serving as the starting point of the distance Ly1 in the circumferential direction, across the position of intersection TY2.

The ratio (Ly1/Lx) of the distance Ly1 in the circumferential direction from the position of intersection TY2 of the second middle longitudinal groove 32 and the middle lateral groove 16m to the first boundary PT1 between the second middle longitudinal groove 32 and the first middle longitudinal groove 30, to the distance Lx in the circumferential direction between the adjacent middle lateral grooves 16m, is preferably not less than 0.07 and not greater than 0.20.

When the ratio (Ly1/Lx) is set to be not less than 0.07, the middle longitudinal groove 26m can effectively serve as an edge component. The middle longitudinal groove 26m can contribute to improvement of wet performance. From this viewpoint, the ratio (Ly1/Lx) is more preferably not less than 0.10.

When the ratio (Ly1/Lx) is set to be not greater than 0.20, draining of water in the middle longitudinal groove 26m is promoted. In this case as well, the middle longitudinal groove 26m can contribute to improvement of wet performance. From this viewpoint, the ratio (Ly1/Lx) is more preferably not greater than 0.17.

The distance Ly2 in the circumferential direction from the position of intersection TY2 to the second boundary PT2 is equal to the distance Ly1 in the circumferential direction from the position of intersection TY2 to the first boundary PT1. The distance Ly2 in the circumferential direction may be shorter than the distance Ly1 in the circumferential direction, or the distance Ly2 in the circumferential direction may be longer than the distance Ly1 in the circumferential direction.

From the viewpoint that the middle longitudinal groove 26m can effectively contribute to improvement of wet performance, the distance Ly2 in the circumferential direction is preferably equal to the distance Ly1 in the circumferential direction. In the present invention, the distance Ly2 in the circumferential direction being equal to the distance Ly1 in the circumferential direction means that the ratio (Ly2/Ly1) of the distance Ly2 in the circumferential direction to the distance Ly1 in the circumferential direction is not less than 0.98 and not greater than 1.02.

In the tire 2, the above-described positions of intersection TY1 and TY2 are located at the width center of the middle land portion 12m. In other words, the first middle longitudinal grooves 30 and the second middle longitudinal grooves 32 intersect the middle lateral grooves 16m at the center in the axial direction of the middle land portion 12m. The middle longitudinal groove 26m including the first middle longitudinal grooves 30 and the second middle longitudinal grooves 32 can effectively serve as an edge component. The middle longitudinal groove 26m can contribute to improvement of wet performance. From this viewpoint, preferably, the first middle longitudinal grooves 30 and the second middle longitudinal grooves 32 intersect the middle lateral grooves 16m at the center in the axial direction of the middle land portion 12m.

In each middle lateral groove 16m shown in FIG. 10, the contours of the edges thereof are represented by arcs. The middle lateral groove 16m is curved in an arc shape. In this middle lateral groove 16m, stress acting on the edges thereof is distributed. Occurrence of wear starting from the edges is suppressed. The middle lateral groove 16m can stably exhibit its function as an edge component. The middle lateral groove 16m can contribute to improvement of wet performance. From this viewpoint, the middle lateral groove 16m is preferably curved in an arc shape.

In FIG. 10, an arrow indicated by reference character R represents the radius of the arc that represents the contour of the edge of the middle lateral groove 16m. Although not shown, the center of this arc is located in an outer region of the middle land portion 12m. Specifically, the center of this arc is located in a region axially outward of the width center of the middle land portion 12m. When the center of the arc that represents the contour of the edge of the middle lateral groove 16m is located in the outer region of the middle land portion 12m, the middle lateral groove 16m can effectively serve as an edge component. From this viewpoint, the edge of the middle lateral groove 16m more preferably has a contour represented by an arc having a center in the outer region of the middle land portion 12m.

As shown in FIG. 2, each crown lateral groove 16c provided on the crown land portion 12c is inclined with respect to the axial direction. The volume of the crown lateral groove 16c is increased as compared to the case where the crown lateral groove 16c is formed so as to extend in the axial direction. The crown lateral groove 16c can contribute to draining of water existing between a road surface and the tread surface 6. The crown lateral groove 16c can contribute to improvement of wet performance. From this viewpoint, in the crown land portion 12c as the block-shaped land portion 12b, each crown lateral groove 16c as the lateral groove 16b is preferably inclined with respect to the axial direction.

Each crown lateral groove 16c shown in FIG. 2 includes a center portion 16cc having a large inclination angle, and a pair of side portions 16cs located on both sides of the center portion 16cc and having a small inclination angle. In FIG. 2, an angle θbc is an angle of an edge of the center portion 16cc with respect to the axial direction. The angle θbc represents the inclination angle of the center portion 16cc. An angle θbs is an angle of an edge of the side portion 16cs with respect to the axial direction. The angle θbs represents the inclination angle of the side portion 16cs.

In the tire 2, preferably, the inclination angle θbs of the side portion 16cs is not less than 15 degrees, and the inclination angle θbc of the center portion 16cc is not greater than 30 degrees. In other words, the inclination angle of the crown lateral groove 16c is preferably not less than 15 degrees and not greater than 30 degrees. Accordingly, the tire 2 can ensure the volume of the crown lateral groove 16c while suppressing the influence of the crown lateral groove 16c on stiffness. The tire 2 can have improved wet performance while maintaining low rolling resistance and good wear resistance. From this viewpoint, the inclination angle of the crown lateral groove 16c is more preferably not less than 15 degrees and not greater than 25 degrees.

For example, as shown in FIG. 2, each middle lateral groove 16m is connected at an end portion on the first end TE1 side thereof to the middle circumferential groove 10m. Each middle lateral groove 16m is connected at an end portion on the second end TE2 side thereof to the center circumferential groove 10c. Accordingly, four corners 34m of each middle block 18m are formed. In the tire 2, two corners 34m1 located on one side in the circumferential direction have acute angles, and two corners 34m2 located on the other side in the circumferential direction have obtuse angles.

Each crown lateral groove 16c is connected at an end portion on the first end TE1 side thereof to the center circumferential groove 10c on the first end TE1 side. Each crown lateral groove 16c is connected at an end portion on the second end TE2 side thereof to the center circumferential groove 10c on the second end TE2 side. Accordingly, four corners 34c of each crown block 18c are formed. In the tire 2, out of two corners 34c1 located on one side in the circumferential direction, the corner 34c1 on the second end TE2 side has an acute angle, and the corner 34c1 located on the first end TE1 side has an obtuse angle. Out of two corners 34c2 located on the other side in the circumferential direction, the corner 34c2 on the second end TE2 side has an obtuse angle, and the corner 34c2 located on the first end TE1 side has an acute angle.

In the tire 2, the corners 34 of the blocks 18 are formed by connecting the lateral grooves 16 to the circumferential grooves 10. The corners 34 having an acute angle or the corners 34 having an obtuse angle are formed by controlling the directions of the lateral grooves 16. Whether each angle 34 has an acute angle or an obtuse angle is determined by the shape of the top surface of the block 18.

As shown in FIG. 2, in the tire 2, in the case where the corner 34 of the block 18 has an acute angle, this corner 34 is chamfered. Accordingly, occurrence of wear due to the corner 34 having an acute angle is suppressed. From this viewpoint, in the case where the corner 34 of the block 18 formed by connecting the lateral groove 16 to the circumferential groove 10 has an acute angle, this corner 34 is preferably chamfered.

As is obvious from the above description, according to the present invention, a heavy duty tire that can stably exhibit good wet performance while suppressing an increase in rolling resistance and a decrease in wear resistance, is obtained.

The above-described technology capable of stably exhibiting good wet performance while suppressing an increase in rolling resistance and a decrease in wear resistance can be applied to various tires.

## Claims

1. A heavy duty tire (2) comprising a tread (4) having a tread surface (6) configured to come into contact with a road surface, wherein
the tread (4) has a plurality of circumferential grooves (10, 10c, 10m, 10b) continuously extending in a circumferential direction,
the plurality of circumferential grooves (10, 10c, 10m, 10b) divide the tread (4) into a plurality of land portions (12, 12c, 12m, 12s, 12b) aligned in an axial direction,
among the plurality of land portions (12, 12c, 12m, 12s, 12b), a land portion (12) including an equator or a land portion (12) closest to the equator is a crown land portion (12c), and a land portion (12) closest to the crown land portion (12c) is a middle land portion (12m),
the crown land portion (12c) and/or the middle land portion (12m) is a block-shaped land portion (12b) having blocks (18, 18c, 18m) aligned in the circumferential direction and having a lateral groove (16, 16c, 16m, 16b) between adjacent blocks (18, 18c, 18m),
a circumferential groove (10) located on one side of the block-shaped land portion (12b) is an irregular circumferential groove (10b) having a non-flat groove wall (20, 20f, 20s, 20c, 20m),
the lateral groove (16, 16c, 16m, 16b) is shallower than the irregular circumferential groove (10b),
an opening of the irregular circumferential groove (10b) includes a pair of edges (14, 14m, 14c, 14b) extending straight,
**characterized in that**
circumferential grooves (10) located on both sides of the block-shaped land portion (12b) are each an irregular circumferential groove (10b) having a non-flat groove wall (20, 20f, 20s, 20c, 20m),
a virtual opening of the irregular circumferential groove (10b) obtained by virtually cutting the tread (4) along a plane (Sm, Sc) including a groove bottom (PB, PBm, PBc, PBb) of the lateral groove (16, 16c, 16m, 16b) includes a pair of virtual edges (24, 24m, 24c, 24b) extending in a zigzag or wavy manner,
each of the pair of virtual edges (24, 24m, 24c, 24b) includes a plurality of virtual peaks (EAm, EAc, EAb) closer to the first end (TE1) or the second end (TE2) of the tread surface (6), the virtual peaks (EAm1, EAc1, EAb1) closer to the first end (TE1) of the tread surface (6) and the virtual peaks (EAm2, EAc2, EAb2) closer to the second end (TE2) of the tread surface (6) are arranged alternately in the circumferential direction, and a distance in the axial direction from the virtual peak (EAm1, EAc1, EAb1) closer to the first end (TE1) to the virtual peak (EAm2, EAc2, EAb2) closer to the second end (TE2) is an amplitude (AAm, AAc, AAb) of the virtual edge (24, 24m, 24c, 24b),
the amplitude (AAm, AAc, AAb) of the virtual edge (24, 24m, 24c, 24b) is larger than an amplitude (Am, Ac, Ab) of the edge (14, 14m, 14c, 14b), which is zero, and
a number of the virtual peaks (EAm, EAc, EAb) included in the virtual edge (24, 24m, 24c, 24b) is larger than a number of the lateral grooves (16, 16c, 16m, 16b) included in the block-shaped land portion (12b).

2. The heavy duty tire (2) according to claim 1, wherein
the irregular circumferential groove (10b) includes a first groove wall (20f, 20mf, 20cf, 20bf) located on the first end (TE1) side of the tread surface (6), a second groove wall (20s, 20ms, 20cs, 20bs) located on the second end (TE2) side of the tread surface (6), and a groove bottom portion (22, 22m, 22c, 22b) connecting the first groove wall (20f, 20mf, 20cf, 20bf) and the second groove wall (20s, 20ms, 20cs, 20bs) and having a groove bottom (PB, PBm, PBc, PBb),
the first groove wall (20f, 20mf, 20cf, 20bf) and the second groove wall (20s, 20ms, 20cs, 20bs) are each the non-flat groove wall (20, 20f, 20s, 20c, 20m),
a locus (LB, LBm, LBc) of the groove bottom (PB, PBm, PBc, PBb) in the irregular circumferential groove (10b) extends in a zigzag or wavy manner while alternately passing through first peaks (Bm1, Bc1) closer to the first end (TE1) of the tread surface (6) and second peaks (Bm2, Bc1) closer to the second end (TE2) of the tread surface (6),
the first groove wall (20f, 20mf, 20cf, 20bf) and the second groove wall (20s, 20ms, 20cs, 20bs) are each inclined with respect to a normal line of the tread surface (6) at the edge (14, 14m, 14c, 14b) of the irregular circumferential groove (10b),
an inclination angle (θ1f) of the first groove wall (20f, 20mf, 20cf, 20bf) at each first peak (Bb1) is smaller than an inclination angle (θ1s) of the second groove wall (20s, 20ms, 20cs, 20bs), and
the inclination angle (θ2f) of the first groove wall (20f, 20mf, 20cf, 20bf) at each second peak (Bb2) is larger than the inclination angle (θ2s) of the second groove wall (20s, 20ms, 20cs, 20bs).

3. The heavy duty tire (2) according to claim 2, wherein
an opening width (WA) of the virtual opening is equal to a sum of a first opening width (Wf) represented as a distance in the axial direction from the groove bottom (PB, PBm, PBc, PBb) to the virtual edge (24, 24m, 24c, 24b) on the first end (TE1) side of the tread surface (6) and a second opening width (Ws) represented as a distance in the axial direction from the groove bottom (PB, PBm, PBc, PBb) to the virtual edge (24, 24m, 24c, 24b) on the second end (TE2) side of the tread surface (6),
the first opening width (W1f) is narrower than the second opening width (W1s) at each first peak (Bb 1), and
the first opening width (W2f) is wider than the second opening width (W2s) at each second peak (Bb2).

4. The heavy duty tire (2) according to any one of claims 1 to 3, wherein a ratio (dy/D) of a depth (dy) of the lateral groove (16b) to a depth (D) of the irregular circumferential groove (10b) is not less than 0.12 and not greater than 0.32.

5. The heavy duty tire (2) according to any one of claims 1 to 4, wherein
the middle land portion (12m) is the block-shaped land portion (12b),
the middle land portion (12m) has a middle lateral groove (16m) as the lateral groove (16) and a middle longitudinal groove (26m) continuously extending in the circumferential direction, and
the middle longitudinal groove (26m) is shallower than the irregular circumferential groove (10b).

6. The heavy duty tire (2) according to claim 5, wherein a ratio (dt/D) of a depth (dt) of the middle longitudinal groove (26m) to the depth (D) of the irregular circumferential groove (10b) is not less than 0.12 and not greater than 0.32.

7. The heavy duty tire (2) according to claim 5 or 6, wherein
the middle longitudinal groove (26m) includes first middle longitudinal grooves (30) inclined with respect to the circumferential direction and second middle longitudinal grooves (32) inclined in a direction opposite to a direction of inclination of the first middle longitudinal grooves (30), and
the first middle longitudinal grooves (30) and the second middle longitudinal grooves (32) are arranged alternately in the circumferential direction.

8. The heavy duty tire (2) according to claim 7, wherein an inclination angle (θa) of each first middle longitudinal groove (30) is not less than 4 degrees and not greater than 12 degrees.

9. The heavy duty tire (2) according to claim 7 or 8, wherein
the first middle longitudinal grooves (30) and the second middle longitudinal grooves (32) alternately intersect a plurality of middle lateral grooves (16m) aligned in the circumferential direction, and
a ratio (Ly1/Lx) of a distance (Ly1) in the circumferential direction from a position of intersection (TY2) of the second middle longitudinal groove (32) and the middle lateral groove (16m) to a boundary (PT1) between the second middle longitudinal groove (32) and the first middle longitudinal groove (30), to a distance (Lx) in the circumferential direction, between adjacent middle lateral grooves (16m), represented as a distance in the circumferential direction from the position of intersection (TY2) of the second middle longitudinal groove (32) and the middle lateral groove (16m) to a position of intersection (TY1) of the first middle longitudinal groove (30) and the middle lateral groove (16m), is not less than 0.07 and not greater than 0.20.

10. The heavy duty tire (2) according to any one of claims 7 to 9, wherein the first middle longitudinal grooves (30) and the second middle longitudinal grooves (32) intersect the middle lateral grooves (16m) at a center in the axial direction of the middle land portion (12m).

11. The heavy duty tire (2) according to any one of claims 5 to 10, wherein each middle lateral groove (16m) is curved in an arc shape.

12. The heavy duty tire (2) according to any one of claims 1 to 11, wherein
the crown land portion (12c) is the block-shaped land portion (12b),
the crown land portion (12c) has a crown lateral groove (16c) as the lateral groove (16),
the crown lateral groove (16c) is inclined with respect to the axial direction, and
an inclination angle of the crown lateral groove (16c) is not less than 15 degrees and not greater than 30 degrees.

13. The heavy duty tire (2) according to any one of claims 1 to 12, wherein, if a corner (34) of the block (18, 18c, 18m) formed by connecting the lateral groove (16, 16c, 16m, 16b) to the circumferential groove (10, 10c, 10m, 10b) has an acute angle, the corner (34) is chamfered.

## Patentansprüche

1. Schwerlastreifen (2), der eine Lauffläche (4) mit einer Laufflächenoberfläche (6) umfasst, die konfiguriert ist, um mit einer Straßenoberfläche in Kontakt zu kommen, wobei
die Lauffläche (4) eine Vielzahl von Umfangsrillen (10, 10c, 10m, 10b) aufweist, die sich kontinuierlich in einer Umfangsrichtung erstrecken,
die Vielzahl von Umfangsrillen (10, 10c, 10m, 10b) die Lauffläche (4) in eine Vielzahl von Landabschnitten (12, 12c, 12m, 12s, 12b) unterteilt, die in einer axialen Richtung ausgerichtet sind,
unter der Vielzahl von Landabschnitten (12, 12c, 12m, 12s, 12b) ein Landabschnitt (12), der einen Äquator einschließt, oder ein Landabschnitt (12), der dem Äquator am nächsten ist, ein Kronenlandabschnitt (12c) ist, und ein Landabschnitt (12), der dem Kronenlandabschnitt (12c) am nächsten ist, ein mittlerer Landabschnitt (12m) ist,
der Kronenlandabschnitt (12c) und/oder der mittlere Landabschnitt (12m) ein blockförmiger Landabschnitt (12b) ist, der Blöcke (18, 18c, 18m) aufweist, die in der Umfangsrichtung ausgerichtet sind, und eine Querrille (16, 16c, 16m, 16b) zwischen benachbarten Blöcken (18, 18c, 18m) aufweist,
eine Umfangsrille (10), die sich auf einer Seite des blockförmigen Landabschnitts (12b) befindet, eine unregelmäßige Umfangsrille (10b) mit einer nicht flachen Rillenwand (20, 20f, 20s, 20c, 20m) ist,
die Querrille (16, 16c, 16m, 16b) flacher als die unregelmäßige Umfangsrille (10b) ist,
eine Öffnung der unregelmäßigen Umfangsrille (10b) ein Paar Kanten (14, 14m, 14c, 14b) umfasst, die sich gerade erstrecken,
**dadurch gekennzeichnet, dass**
Umfangsrillen (10), die sich auf beiden Seiten des blockförmigen Landabschnitts (12b) befinden, jeweils eine unregelmäßige Umfangsrille (10b) mit einer nicht flachen Rillenwand (20, 20f, 20s, 20c, 20m) sind,
eine virtuelle Öffnung der unregelmäßigen Umfangsrille (10b), die durch virtuelles Schneiden der Lauffläche (4) entlang einer Ebene (Sm, Sc) erhalten wird, die einen Rillengrund (PB, PBm, PBc, PBb) der Querrille (16, 16c, 16m, 16b) umfasst, ein Paar virtueller Kanten (24, 24m, 24c, 24b) umfasst, die sich in einer zickzack- oder welligen Weise erstrecken,
jede des Paars virtueller Kanten (24, 24m, 24c, 24b) eine Vielzahl virtueller Spitzen (EAm, EAc, EAb) näher an dem ersten Ende (TE1) oder dem zweiten Ende (TE2) der Laufflächenoberfläche (6) umfasst, die virtuellen Spitzen (EAm1, EAc1, EAb1), die näher an dem ersten Ende (TE1) der Laufflächenoberfläche (6) liegen, und die virtuellen Spitzen (EAm2, EAc2, EAb2), die näher an dem zweiten Ende (TE2) der Laufflächenoberfläche (6) liegen, abwechselnd in der Umfangsrichtung angeordnet sind, und ein Abstand in der axialen Richtung von der virtuellen Spitze (EAm1, EAc1, EAb1), die näher an dem ersten Ende (TE1) liegen, zu der virtuellen Spitze (EAm2, EAc2, EAb2), die näher an dem zweiten Ende (TE2) liegen, eine Amplitude (AAm, AAc, AAb) der virtuellen Kante (24, 24m, 24c, 24b) ist,
die Amplitude (AAm, AAc, AAb) der virtuellen Kante (24, 24m, 24c, 24b) größer als eine Amplitude (Am, Ac, Ab) der Kante (14, 14m, 14c, 14b) ist, die null ist, und
eine Anzahl der virtuellen Spitzen (EAm, EAc, EAb), die in der virtuellen Kante (24, 24m, 24c, 24b) enthalten sind, größer als eine Anzahl der Querrillen (16, 16c, 16m, 16b) ist, die in dem blockförmigen Landabschnitt (12b) enthalten sind.

2. Schwerlastreifen (2) nach Anspruch 1, wobei
die unregelmäßige Umfangsrille (10b) eine erste Rillenwand (20f, 20mf, 20cf, 20bf), die sich auf der Seite des ersten Endes (TE1) der Laufflächenoberfläche (6) befindet, eine zweite Rillenwand (20s, 20ms, 20cs, 20bs), die sich auf der Seite des zweiten Endes (TE2) der Laufflächenoberfläche (6) befindet, und einen Rillengrundabschnitt (22, 22m, 22c, 22b) umfasst, der die erste Rillenwand (20f, 20mf, 20cf, 20bf) und die zweite Rillenwand (20s, 20ms, 20cs, 20bs) verbindet und einen Rillengrund (PB, PBm, PBc, PBb) aufweist,
die erste Rillenwand (20f, 20mf, 20cf, 20bf) und die zweite Rillenwand (20s, 20ms, 20cs, 20bs) jeweils die nicht flache Rillenwand (20, 20f, 20s, 20c, 20m) sind,
eine Ortslinie (LB, LBm, LBc) des Rillengrunds (PB, PBm, PBc, PBb) in der unregelmäßigen Umfangsrille (10b) sich in einer zickzack- oder welligen Weise erstreckt, während sie abwechselnd durch erste Spitzen (Bm1, Bc1), die näher an dem ersten Ende (TE1) der Laufflächenoberfläche (6) liegen, und zweite Spitzen (Bm2, Bc1), die näher an dem zweiten Ende (TE2) der Laufflächenoberfläche (6) liegen, verläuft,
die erste Rillenwand (20f, 20mf, 20cf, 20bf) und die zweite Rillenwand (20s, 20ms, 20cs, 20bs) jeweils in Bezug auf eine Normallinie der Laufflächenoberfläche (6) an der Kante (14, 14m, 14c, 14b) der unregelmäßigen Umfangsrille (10b) geneigt sind,
ein Neigungswinkel (θ1f) der ersten Rillenwand (20f, 20mf, 20cf, 20bf) an jeder ersten Spitze (Bb1) kleiner als ein Neigungswinkel (θ1s) der zweiten Rillenwand (20s, 20ms, 20cs, 20bs) ist, und
der Neigungswinkel (θ2f) der ersten Rillenwand (20f, 20mf, 20cf, 20bf) an jeder zweiten Spitze (Bb2) größer als der Neigungswinkel (θ2s) der zweiten Rillenwand (20s, 20ms, 20cs, 20bs) ist.

3. Schwerlastreifen (2) nach Anspruch 2, wobei
eine Öffnungsbreite (WA) der virtuellen Öffnung gleich einer Summe einer ersten Öffnungsbreite (Wf), die als ein Abstand in der axialen Richtung von dem Rillengrund (PB, PBm, PBc, PBb) zu der virtuellen Kante (24, 24m, 24c, 24b) auf der Seite des ersten Endes (TE1) der Laufflächenoberfläche (6) dargestellt ist, und einer zweiten Öffnungsbreite (Ws) ist, die als ein Abstand in der axialen Richtung von dem Rillengrund (PB, PBm, PBc, PBb) zu der virtuellen Kante (24, 24m, 24c, 24b) auf der Seite des zweiten Endes (TE2) der Laufflächenoberfläche (6) dargestellt ist,
die erste Öffnungsbreite (W1f) schmaler als die zweite Öffnungsbreite (W1s) an jeder ersten Spitze (Bb1) ist, und
die erste Öffnungsbreite (W2f) breiter als die zweite Öffnungsbreite (W2s) an jeder zweiten Spitze (Bb2) ist.

4. Schwerlastreifen (2) nach einem der Ansprüche 1 bis 3, wobei ein Verhältnis (dy/D) einer Tiefe (dy) der Querrille (16b) zu einer Tiefe (D) der unregelmäßigen Umfangsrille (10b) nicht kleiner als 0,12 und nicht größer als 0,32 ist.

5. Schwerlastreifen (2) nach einem der Ansprüche 1 bis 4, wobei
der mittlere Landabschnitt (12m) der blockförmige Landabschnitt (12b) ist,
der mittlere Landabschnitt (12m) eine mittlere Querrille (16m) als die Querrille (16) und eine mittlere Längsrille (26m) aufweist, die sich kontinuierlich in der Umfangsrichtung erstreckt, und
die mittlere Längsrille (26m) flacher als die unregelmäßige Umfangsrille (10b) ist.

6. Schwerlastreifen (2) nach Anspruch 5, wobei ein Verhältnis (dt/D) einer Tiefe (dt) der mittleren Längsrille (26m) zu der Tiefe (D) der unregelmäßigen Umfangsrille (10b) nicht kleiner als 0,12 und nicht größer als 0,32 ist.

7. Schwerlastreifen (2) nach Anspruch 5 oder 6, wobei
die mittlere Längsrille (26m) erste mittlere Längsrillen (30), die in Bezug auf die Umfangsrichtung geneigt sind, und zweite mittlere Längsrillen (32) umfasst, die in einer Richtung entgegengesetzt zu einer Neigungsrichtung der ersten mittleren Längsrillen (30) geneigt sind, und
die ersten mittleren Längsrillen (30) und die zweiten mittleren Längsrillen (32) abwechselnd in der Umfangsrichtung angeordnet sind.

8. Schwerlastreifen (2) nach Anspruch 7, wobei ein Neigungswinkel (θa) jeder ersten mittleren Längsrille (30) nicht kleiner als 4 Grad und nicht größer als 12 Grad ist.

9. Schwerlastreifen (2) nach Anspruch 7 oder 8, wobei
die ersten mittleren Längsrillen (30) und die zweiten mittleren Längsrillen (32) abwechselnd eine Vielzahl von mittleren Querrillen (16m) schneiden, die in der Umfangsrichtung ausgerichtet sind, und
ein Verhältnis (Ly1/Lx) eines Abstands (Ly1) in der Umfangsrichtung von einer Schnittposition (TY2) der zweiten mittleren Längsrille (32) und der mittleren Querrille (16m) zu einer Grenze (PT1) zwischen der zweiten mittleren Längsrille (32) und der ersten mittleren Längsrille (30) zu einem Abstand (Lx) in der Umfangsrichtung zwischen benachbarten mittleren Querrillen (16m), dargestellt als ein Abstand in der Umfangsrichtung von der Schnittposition (TY2) der zweiten mittleren Längsrille (32) und der mittleren Querrille (16m) zu einer Schnittposition (TY1) der ersten mittleren Längsrille (30) und der mittleren Querrille (16m), nicht kleiner als 0,07 und nicht größer als 0,20 ist.

10. Schwerlastreifen (2) nach einem der Ansprüche 7 bis 9, wobei die ersten mittleren Längsrillen (30) und die zweiten mittleren Längsrillen (32) die mittleren Querrillen (16m) in einer Mitte in der axialen Richtung des mittleren Landabschnitts (12m) schneiden.

11. Schwerlastreifen (2) nach einem der Ansprüche 5 bis 10, wobei jede mittlere Querrille (16m) in einer Bogenform gekrümmt ist.

12. Schwerlastreifen (2) nach einem der Ansprüche 1 bis 11, wobei
der Kronenlandabschnitt (12c) der blockförmige Landabschnitt (12b) ist,
der Kronenlandabschnitt (12c) eine Kronenquerrille (16c) als die Querrille (16) aufweist,
die Kronenquerrille (16c) in Bezug auf die axiale Richtung geneigt ist, und
ein Neigungswinkel der Kronenquerrille (16c) nicht kleiner als 15 Grad und nicht größer als 30 Grad ist.

13. Schwerlastreifen (2) nach einem der Ansprüche 1 bis 12, wobei, wenn eine Ecke (34) des Blocks (18, 18c, 18m), der durch Verbinden der Querrille (16, 16c, 16m, 16b) mit der Umfangsrille (10, 10c, 10m, 10b) gebildet ist, einen spitzen Winkel aufweist, die Ecke (34) abgeschrägt ist.

## Revendications

1. Pneumatique pour service intensif (2) comprenant une bande de roulement (4) ayant une surface de bande de roulement (6) configurée pour venir en contact avec une surface routière, dans lequel
la bande de roulement (4) a une pluralité de rainures circonférentielles (10, 10c, 10m, 10b) s'étendant en continu dans une direction circonférentielle,
la pluralité de rainures circonférentielles (10, 10c, 10m, 10b) divisent la bande de roulement (4) en une pluralité de portions en relief (12, 12c, 12m, 12s, 12b) alignées dans une direction axiale,
parmi la pluralité de portions en relief (12, 12c, 12m, 12s, 12b), une portion en relief (12) incluant un équateur ou une portion en relief (12) la plus proche de l'équateur est une portion en relief de couronne (12c), et une portion en relief (12) la plus proche de la portion en relief de couronne (12c) est une portion en relief médiane (12m),
la portion en relief de couronne (12c) et/ou la portion en relief médiane (12m) est une portion en relief en forme de blocs (12b) ayant des blocs (18, 18c, 18m) alignés dans la direction circonférentielle et ayant une rainure latérale (16, 16c, 16m, 16b) entre des blocs adjacents (18, 18c, 18m),
une rainure circonférentielle (10) située sur un côté de la portion en relief en forme de blocs (12b) est une rainure circonférentielle irrégulière (10b) ayant une paroi de rainure non plate (20, 20f, 20s, 20c, 20m),
la rainure latérale (16, 16c, 16m, 16b) est moins profonde que la rainure circonférentielle irrégulière (10b),
une ouverture de la rainure circonférentielle irrégulière (10b) inclut une paire de bords (14, 14m, 14c, 14b) s'étendant de façon rectiligne,
**caractérisé en ce que**
des rainures circonférentielles (10) situées sur les deux côtés de la portion en relief en forme de blocs (12b) sont chacune une rainure circonférentielle irrégulière (10b) ayant une paroi de rainure non plate (20, 20f, 20s, 20c, 20m),
une ouverture virtuelle de la rainure circonférentielle irrégulière (10b) obtenue en découpant virtuellement la bande de roulement (4) le long d'un plan (Sm, Sc) incluant un fond de rainure (PB, PBm, PBc, PBb) de la rainure latérale (16, 16c, 16m, 16b) inclut une paire de bords virtuels (24, 24m, 24c, 24b) s'étendant en zigzag ou en ondulations,
chacun de la paire de bords virtuels (24, 24m, 24c, 24b) inclut une pluralité de pics virtuels (EAm, EAc, EAb) plus proches de la première extrémité (TE1) ou de la seconde extrémité (TE2) de la surface de bande de roulement (6), les pics virtuels (EAm1, EAc1, EAb1) plus proches de la première extrémité (TE1) de la surface de bande de roulement (6) et les pics virtuels (EAm2, EAc2, EAb2) plus proches de la seconde extrémité (TE2) de la surface de bande de roulement (6) sont agencés en alternance dans la direction circonférentielle, et une distance dans la direction axiale depuis le pic virtuel (EAm1, EAc1, EAb1) plus proche de la première extrémité (TE1) jusqu'au pic virtuel (EAm2, EAc2, EAb2) plus proche de la seconde extrémité (TE2) est une amplitude (AAm, AAc, AAb) du bord virtuel (24, 24m, 24c, 24b),
l'amplitude (AAm, AAc, AAb) du bord virtuel (24, 24m, 24c, 24b) est plus grande qu'une amplitude (Am, Ac, Ab) du bord (14, 14m, 14c, 14b), qui est égale à zéro, et
un nombre de pics virtuels (EAm, EAc, EAb) inclus dans le bord virtuel (24, 24m, 24c, 24b) est plus grand qu'un nombre de rainures latérales (16, 16c, 16m, 16b) incluses dans la portion en relief en forme de blocs (12b).

2. Pneumatique pour service intensif (2) selon la revendication 1, dans lequel la rainure circonférentielle irrégulière (10b) inclut une première paroi de rainure (20f, 20mf, 20cf, 20bf) située sur le côté de la première extrémité (TE1) de la surface de bande de roulement (6), une seconde paroi de rainure (20s, 20ms, 20cs, 20bs) située sur le côté de la seconde extrémité (TE2) de la surface de bande de roulement (6), et une portion de fond de rainure (22, 22m, 22c, 22b) connectant la première paroi de rainure (20f, 20mf, 20cf, 20bf) et la seconde paroi de rainure (20s, 20ms, 20cs, 20bs) et ayant un fond de rainure (PB, PBm, PBc, PBb),
la première paroi de rainure (20f, 20mf, 20cf, 20bf) et la seconde paroi de rainure (20s, 20ms, 20cs, 20bs) sont chacune la paroi de rainure non plate (20, 20f, 20s, 20c, 20m),
un locus (LB, LBm, LBc) du fond de rainure (PB, PBm, PBc, PBb) dans la rainure circonférentielle irrégulière (10b) s'étend en zigzag ou en ondulations tout en passant en alternance à travers des premiers pics (Bm1, Bc1) plus proches de la première extrémité (TE1) de la surface de bande de roulement (6) et des seconds pics (Bm2, Bc1) plus proches de la seconde extrémité (TE2) de la surface de bande de roulement (6),
la première paroi de rainure (20f, 20mf, 20cf, 20bf) et la seconde paroi de rainure (20s, 20ms, 20cs, 20bs) sont chacune inclinées par rapport à une ligne normale de la surface de bande de roulement (6) au niveau du bord (14, 14m, 14c, 14b) de la rainure circonférentielle irrégulière (10b),
un angle d'inclinaison (θ1f) de la première paroi de rainure (20f, 20mf, 20cf, 20bf) au niveau de chaque premier pic (Bb1) est plus petit qu'un angle d'inclinaison (θ1s) de la seconde paroi de rainure (20s, 20ms, 20cs, 20bs), et
l'angle d'inclinaison (θ2f) de la première paroi de rainure (20f, 20mf, 20cf, 20bf) au niveau de chaque second pic (Bb2) est plus grand que l'angle d'inclinaison (θ2s) de la seconde paroi de rainure (20s, 20ms, 20cs, 20bs).

3. Pneumatique pour service intensif (2) selon la revendication 2, dans lequel une largeur d'ouverture (WA) de l'ouverture virtuelle est égale à une somme d'une première largeur d'ouverture (Wf) représentée en tant que distance dans la direction axiale depuis le fond de rainure (PB, PBm, PBc, PBb) jusqu'au bord virtuel (24, 24m, 24c, 24b) sur le côté de la première extrémité (TE1) de la surface de bande de roulement (6) et une seconde largeur d'ouverture (Ws) représentée en tant que distance dans la direction axiale depuis le fond de rainure (PB, PBm, PBc, PBb) jusqu'au bord virtuel (24, 24m, 24c, 24b) sur le côté de la seconde extrémité (TE2) de la surface de bande de roulement (6),
la première largeur d'ouverture (W1f) est plus étroite que la seconde largeur d'ouverture (W1s) au niveau de chaque premier pic (Bb1), et
la première largeur d'ouverture (W2f) est plus large que la seconde largeur d'ouverture (W2s) au niveau de chaque second pic (Bb2).

4. Pneumatique pour service intensif (2) selon l'une quelconque des revendications 1 à 3, dans lequel un rapport (dy/D) d'une profondeur (dy) de la rainure latérale (16b) sur une profondeur (D) de la rainure circonférentielle irrégulière (10b) n'est pas inférieur à 0,12 et n'est pas supérieur à 0,32.

5. Pneumatique pour service intensif (2) selon l'une quelconque des revendications 1 à 4, dans lequel
la portion en relief médiane (12m) est la portion en relief en forme de blocs (12b),
la portion en relief médiane (12m) a une rainure latérale médiane (16m) en tant que rainure latérale (16) et une rainure longitudinale médiane (26m) s'étendant en continu dans la direction circonférentielle, et
la rainure longitudinale médiane (26m) est moins profonde que la rainure circonférentielle irrégulière (10b).

6. Pneumatique pour service intensif (2) selon la revendication 5, dans lequel un rapport (dt/D) d'une profondeur (dt) de la rainure longitudinale médiane (26m) sur la profondeur (D) de la rainure circonférentielle irrégulière (10b) n'est pas inférieur à 0,12 et n'est pas supérieur à 0,32.

7. Pneumatique pour service intensif (2) selon la revendication 5 ou 6, dans lequel
la rainure longitudinale médiane (26m) inclut des premières rainures longitudinales médianes (30) inclinées par rapport à la direction circonférentielle et des secondes rainures longitudinales médianes (32) inclinées dans une direction opposée à une direction d'inclinaison des premières rainures longitudinales médianes (30), et
les premières rainures longitudinales médianes (30) et les secondes rainures longitudinales médianes (32) sont agencées en alternance dans la direction circonférentielle.

8. Pneumatique pour service intensif (2) selon la revendication 7, dans lequel un angle d'inclinaison (θa) de chaque première rainure longitudinale médiane (30) n'est pas inférieur à 4 degrés et n'est pas supérieur à 12 degrés.

9. Pneumatique pour service intensif (2) selon la revendication 7 ou 8, dans lequel
les premières rainures longitudinales médianes (30) et les secondes rainures longitudinales médianes (32) recoupent en alternance une pluralité de rainures latérales médianes (16m) alignées dans la direction circonférentielle, et
un rapport (Ly1/Lx) d'une distance (Ly1) dans la direction circonférentielle depuis une position d'intersection (TY2) de la seconde rainure longitudinale médiane (32) et la rainure latérale médiane (16m) jusqu'à une frontière (PT1) entre la seconde rainure longitudinale médiane (32) et la première rainure longitudinale médiane (30), sur une distance (Lx) dans la direction circonférentielle, entre des rainures latérales médianes adjacentes (16m), représentée en tant que distance dans la direction circonférentielle depuis la position d'intersection (TY2) de la seconde rainure longitudinale médiane (32) et la rainure latérale médiane (16m) jusqu'à une position d'intersection (TY1) de la première rainure longitudinale médiane (30) et la rainure latérale médiane (16m), n'est pas inférieur à 0,07 et n'est pas supérieur à 0,20.

10. Pneumatique pour service intensif (2) selon l'une quelconque des revendications 7 à 9, dans lequel
les premières rainures longitudinales médianes (30) et les secondes rainures longitudinales médianes (32) recoupent les rainures latérales médianes (16m) au niveau d'un centre dans la direction axiale de la portion en relief médiane (12m).

11. Pneumatique pour service intensif (2) selon l'une quelconque des revendications 5 à 10, dans lequel chaque rainure latérale médiane (16m) est incurvée en forme d'arc.

12. Pneumatique pour service intensif (2) selon l'une quelconque des revendications 1 à 11, dans lequel
la portion en relief de couronne (12c) est la portion en relief en forme de blocs (12b),
la portion en relief de couronne (12c) a une rainure latérale de couronne (16c) en tant que rainure latérale (16),
la rainure latérale de couronne (16c) est inclinée par rapport à la direction axiale, et
un angle d'inclinaison de la rainure latérale de couronne (16c) n'est pas inférieur à 15 degrés et n'est pas supérieur à 30 degrés.

13. Pneumatique pour service intensif (2) selon l'une quelconque des revendications 1 à 12, dans lequel, si un coin (34) du bloc (18, 18c, 18m) formé en connectant la rainure latérale (16, 16c, 16m, 16b) à la rainure circonférentielle (10, 10c, 10m, 10b) a un angle aigu, le coin (34) est chanfreiné.
